# EUROPEAN PATENT APPLICATION

(11) **EP 1 820 673 A1**
(43) Date of publication of application: **22.08.2007**
(21) Application number: 05799136.6
(22) Date of filing: 19.10.2005
(51) Int. Cl.: B60G 13/02, B60G 17/00, B60G 17/015, B60R 21/34, B60R 21/01, B62D 25/08, B62D 25/10

(54) **SUSPENSION DEVICE FOR VEHICLE**

(30) Priority: 22.10.2004 JP 2004308530
(71) Applicant: TOYOTA JIDOSHA KABUSHIKI KAISHA, Toyota-shi, Aichi-ken, 471-8571 (JP); KAYABA INDUSTRY CO., LTD., Minato-Ku, Tokyo (JP)
(72) Inventor: INOUE, Hirofumi, c/o Toyota Jidosha Kabushiki K., Toyota-shi, Aichi 471-8571 (JP); KAJINO, Hidenori, c/o Toyota Jidosha Kabushiki K., Toyota-shi, Aichi 471-8571 (JP); DATE, Hiroaki, c/o Toyota Jidosha Kabushiki Kaisha, Toyota-shi, Aichi 471-8571 (JP); KUBOTA, Tomoo, c/o Kayaba Industry Co., Ltd., Tokyo 105-0013 (JP)
(74) Representative: Harris, Ian Richard
(86) International application number: PCT/JP2005/019650
(87) International publication number: WO 2006/043714

(57) **Abstract**

To offer a suspension apparatus for a vehicle with high utility, a suspension apparatus 10 having a damping-force generating device 12 which includes a body-side unit 34 attached so as to project upward from a mount portion 16 formed at a part of the vehicle is provided with a projecting-portion-displacement permitting mechanism for permitting a displacement of at least a projecting portion such that an amount of projection of the projecting portion decreases. The projecting-portion-displacement permitting mechanism is configured as follows, for instance. In a structure in which a downward movement of the body-side unit is prohibited by a pin 52 of a solenoid 50, the solenoid is energized and the pin is withdrawn, thereby releasing the prohibition of the movement of the body-side unit. In consequence, the body side-unit is permitted to move downward. The mechanism increases a distance between an upper end of the damping-force generating device and a hood 90 disposed above the mount portion, so that an impact applied to the hood from above can be effectively mitigated utilizing a space between the upper end of the damping-force generating device and the hood in which the distance therebetween is increased.

## Description

### TECHNICAL FIELD

The present invention relates to a suspension apparatus installed on a vehicle for suspending a body of the vehicle, and more particularly to a structure of installing, on the body of the vehicle, a damping-force generating device such as a suspension cylinder constituting the suspension apparatus.

### BACKGROUND ART

An ordinary vehicle suspension apparatus generally includes a suspension cylinder as a damping-force generating device such as a shock absorber for generating a damping force. The suspension cylinder generally includes a housing and a rod that is disposed so as to be inserted in the housing. In the suspension cylinder, a wheel-side unit constituted by including one of the housing and the rod is coupled to a wheel-holding member (such as a suspension arm) while a body-side unit constituted by including the other of the housing and the rod is attached to a part of the vehicle body (such as an upper portion of a tire housing). The thus constructed suspension cylinder is configured to be telescopically movable in accordance with a relative movement of the wheel and the part of the vehicle body toward and away from each other and to generate a damping force by giving a resistance with respect to the telescopic movement. A structure for installing the body-side unit on the part of the vehicle body is disclosed in the following Patent Documents 1 and 2, for instance. In the disclosed structure, an opening through which the body-side unit is inserted is formed in a mount portion which is the part of the vehicle body, and the body-side unit is installed on the part of the vehicle body such that an upper end of the body-side unit projects upward from the mount portion.

In the meantime, there has been proposed a suspension cylinder constructed as follows. An external thread portion is provided in one of the wheel-side unit and the body-side unit which cooperate to each other to constitute the suspension cylinder while an internal thread portion is provided in the other of the wheel-side unit and the body-side unit. The internal thread portion engages the external thread portion such that the internal thread portion rotates relative to the external thread portion in accordance with a relative movement of the wheel-side unit and the body-side unit. Further, a motor as an actuator is provided to apply a relative rotational torque to the external and internal thread portions and thereby give a resistance to the relative movement of those two units, whereby there is generated a damping force based on the resistance. A suspension apparatus equipped with the thus constructed suspension cylinder is generally called an electromagnetic suspension apparatus and disclosed in the following Patent Documents 3, 4, and 5, for instance:
[Patent Document 1] JP-A-2002-120535
[Patent Document 2] JP-A-2003-327075
[Patent Document 3] JP-A-2003-343648
[Patent Document 4] JP-A-2001-180244
[Patent Document 5] JP-A-8-197931

### DISCLOSURE OF THE INVENTION

### (A) SUMMARY OF THE INVENTION

A mount portion which is formed at the part of the vehicle body and on which the suspension cylinder is mounted is covered with a hood such as a bonnet that is disposed above the mount portion so as to be spaced apart therefrom. When a certain object such as a pedestrian contacts the hood from above, the presence of the body-side unit that projects upward from the mount portion is a hindrance to mitigation of an impact arising from the contact. From the viewpoint of effectively mitigating the impact, it is desirable to maximize a distance between an upper end of the projecting portion of the body-side unit and the hood, namely, a distance between an upper end of the suspension cylinder and the hood.

In the suspension apparatus described in the above-indicated Patent Documents 1 and 2, the projecting portion is inclined or a portion of the hood is held in abutting contact with a rubber vibration damper, thereby increasing an effect of mitigating the impact. In the disclosed suspension apparatus, however, the body-side unit is substantially fixed to the mount portion, so that the distance between the upper end of the suspension cylinder and the hood cannot be increased. In the suspension apparatus described in the above-indicated Patent Documents 3, 4, and 5, because the body-side unit includes a motor, an amount of projection of the body-side unit from the mount portion is inevitably large, making it difficult to increase the distance between the suspension cylinder and the hood. That is, in the suspension apparatus configured such that the body-side unit projects upward from the mount portion, it is desirable to provide certain measures that assure effective impact mitigation.

While the projection of the body-side unit is a sort of problem experienced in the conventional suspension apparatus, the conventional apparatus experience various other problems. Accordingly, it is possible to improve, in various aspects, the utility of the apparatus by making various modifications to overcome the problems. The present invention has been developed in the light of the situations. It is therefore an object of the invention to provide a suspension apparatus for a vehicle with high utility

To achieve the object indicated above, the present vehicle suspension apparatus is characterized by including a projecting-portion-displacement permitting mechanism for permitting a displacement of at least a projecting portion that is a portion of a body-side unit forming a damping-force generating device and that projects upward from a part of a vehicle body on which the body-side unit is installed, the projecting-portion-displacement permitting mechanism permitting the displacement of at least the projecting portion such that an amount of projection of the projecting portion decreases.

The present vehicle suspension apparatus includes the projecting-portion-displacement permitting mechanism as a mechanism for permitting a decrease in the amount of projection of the projecting portion which is the portion of the body-side unit projecting upward. Owing to the mechanism indicated above, the distance between the upper end of the damping-force generating device and the hood disposed above the mount portion can be increased, for instance. According to the present vehicle suspension apparatus, it is possible to effectively absorb an impact that acts on the hood from above, by utilizing a space between the upper end of the damping-force generating device and the hood in which the distance therebetween is increased. Thus, the present suspension apparatus has high utility.

### (B) FORMS OF INVENTION

There will be described in detail various forms of an invention which is considered claimable (hereinafter referred to as "claimable invention" where appropriate). Each of the forms of the invention is numbered like the appended claims and depends from the other form or forms, where appropriate, for easier understanding of the claimable invention. It is to be understood that the invention is not limited to the technical features or any combinations thereof which will be described, and shall be construed in the light of the following descriptions of the various forms and preferred embodiments of the claimable invention. It is to be further understood that a plurality of elements or features included in any one of the following forms of the claimable invention are not necessarily provided all together, and that any form in which one or more elements or one or more features is/are added to any one of the following forms and any form in which one or more elements or one or more features is/are deleted from any one of the following forms may be considered one form of the claimable invention.

(1) A suspension apparatus for a vehicle comprising:
a damping-force generating device which includes a wheel-side unit coupled to a wheel-holding member that holds a wheel and a body-side unit mounted on a mount portion that is formed at a part of a vehicle body located above the wheel, such that an upper end of the body-side unit projects upward from the mount portion, the damping-force generating device generating a damping force with respect to a relative movement of the wheel and the part of the vehicle body, based on a resistance to a relative movement of the wheel-side unit and the body-side unit associated with the relative movement of the wheel and the part of the vehicle body, and
a projecting-portion-displacement permitting mechanism for permitting a displacement of at least a projecting portion which is a portion of the body-side unit projecting upward from the mount portion, such that an amount of projection of the projecting portion from the mount portion decreases.

The suspension apparatus according to the form (1) is equipped with the projecting-portion-displacement permitting mechanism as a mechanism for permitting a decrease in the amount of projection of the projecting portion of the body-side unit. The mechanism enlarges a space between the damping-force generating device and a hood such as a bonnet disposed over the mount portion, more specifically, a distance between the hood and the upper end of the body-side unit. Accordingly, the suspension apparatus according to the form (1) enables an impact acting on the hood from above to be effectively mitigated, utilizing the enlarged space. That is, it is possible to increase an amount of deformation of the hood caused by the impact acting on the hood, thereby increasing a stroke for absorbing the impact. Thus, the impact can be effectively absorbed. For instance, in a case where a pedestrian comes into contact with the hood from above upon a contact with the vehicle, the present suspension apparatus can effectively mitigate the impact that the pedestrian receives. Accordingly, the present suspension apparatus is effective in such an instance. Therefore, the form (1) explained above realizes a vehicle suspension apparatus with high utility. The conventional suspension apparatus disclosed in the above-indicated Patent Documents do not permit a substantial displacement of the body-side unit, so that the space described above is not enlarged. Accordingly, the suspension apparatus of the form (1) is excellent in terms of impact mitigation, as compared with the conventional suspension apparatus.

The "damping-force generating device" in the suspension apparatus according to the form (1) may include a so-called shock absorber, for instance. More specifically described, the damping-force generating device may include the above-indicated suspension cylinder which is constituted by including a housing and a rod that is disposed so as to be inserted into the housing and which is configured such that the housing and the rod are telescopically movable associated with the relative movement of the wheel and the part of the vehicle body toward and away from each other. Where the damping-force generating device is the suspension cylinder, the above-indicated "wheel-side unit" is constituted by including one of the housing and the rod while the above-indicated "body-side unit" is constituted by including the other of the housing and the rod. Where the suspension cylinder is employed, it may be possible to employ the one constructed as follows, for instance. That is, the rod has a piston while the housing is configured such that its inner space is divided into two fluid chambers. The piston is formed with an orifice through which a working fluid flows between the two chambers in accordance with a telescopic movement of the suspension cylinder, thereby generating a resistance to the flow of the fluid between the two chambers. It may also be possible to employ a suspension cylinder explained below in detail, i.e., a suspension cylinder that constitutes an electromagnetic suspension apparatus. The wheel-side unit and the body-side unit may be constituted by respectively including only one and the other of the housing and the rod. Where the suspension cylinder is equipped with an actuator for changing a magnitude of a damping force to be generated by changing a cross sectional area of the orifice indicated above, the wheel-side unit or the body-side unit may include the actuator. Where the suspension cylinder constitutes the electromagnetic suspension apparatus which will be explained, the suspension cylinder includes a motor for generating a damping force. In this instance, the wheel-side unit or the body-side unit may include the motor.

The "projecting-portion-displacement permitting mechanism" is not particularly limited in structure. Various structures may be employed as long as the mechanism permits a displacement of at least the projecting portion of the body-side unit such that the amount of projection of the projecting portion decreases. For instance, it may be possible to employ a structure in which the entirety of the body-side unit is permitted to move or deform for thereby decreasing the amount of projection of the projecting portion. It may also be possible to employ a structure in which only the projecting portion is permitted to move or deform for thereby decreasing the amount of projection of the projecting portion. There will be explained in detail, in the following forms, arrangements relating to specific structures that the projecting-portion-displacement permitting mechanism can employ.

In the form (1) described above, at least the projecting portion of the body-side unit which is permitted to displace by the projecting-portion-displacement permitting mechanism may be displaced in any manner. For instance, at least the projecting portion may be displaced by the gravity or by an action of the impact acting on the hood. Further, at least the projecting portion may be forcibly displaced by a drive force of an additionally provided actuator. The "displacement of at least a projecting portion" of the body-side unit does not mean a slight displacement generated by being supported by an elastic member such as a rubber vibration damper, but means a displacement that allows a substantial increase in the distance between the projecting portion of the body-side unit and the hood, as apparent from the effect to be offered by the form (1). More specifically explained, it is preferable, for instance, that the projecting-portion-displacement permitting mechanism permit a displacement that allows the amount of projection of the projecting portion to decrease by not less than 1 cm. It is more preferable that the projecting-portion-displacement permitting mechanism permit a maximum displacement that allows the amount of projection of the projecting portion to decrease by not less than 2 cm, not less than 3 cm, not less than 4 cm, or not less than 5 cm, for instance.

(2) The suspension apparatus according to the above form (1), comprising: (a) an external thread portion and an internal thread portion which engage each other and one of which is provided in the wheel-side unit immovably in an upward and downward direction while the other of which is provided in the body-side unit immovably in the upward and downward direction, the external thread portion and the internal thread portion rotating relative to each other associated with the relative movement of the wheel-side unit and the body-side unit; and (b) a motor which applies a relative rotational torque to the external thread portion and the internal thread portion for thereby giving the resistance to the relative movement of the wheel-side unit and the body-side unit.

The form (2) includes an arrangement relating to a so-called electromagnetic suspension apparatus. For instance, there is included in the form (2) a suspension apparatus with a suspension cylinder in which the wheel-side unit and the body-side unit are coupled to each other by a ball screw mechanism, for instance. Such a suspension apparatus has a motor as an actuator for generating a damping force, so that the damping-force generating device inevitably has an increased length. Accordingly, as in the suspension apparatus disclosed in the above-indicated Patent Documents, the body-side unit is generally attached to the mount portion formed at a part of the vehicle body, such that the body-side unit projects upward from the mount portion. Therefore, the above-indicated projecting-portion-displacement permitting mechanism capable of decreasing the amount of projection of the projecting portion of the body-side unit is particularly effective for the electromagnetic suspension apparatus as a means of assuring the function of impact mitigation. The form (2) realizes an electromagnetic suspension apparatus having an excellent impact mitigating function.

(3) The suspension apparatus according to the above for, (1) or (2), which comprises an elastic member and a hydraulic damper disposed parallel to each other and which is configured such that the body-side unit is elastically supported on the mount portion by the elastic member and the hydraulic damper.

Where the body-side unit is elastically supported in a manner according to the form (3), it is possible to effectively suppress a vibration transmitted to the vehicle body through the wheel-side unit and the body-side unit. Accordingly, the suspension apparatus according to the form (3) allows an improvement in the ride comfort of the vehicle. There will be explained in detail an arrangement in which the above-indicated projecting-portion-displacement permitting mechanism is constituted by utilizing the structure of elastically supporting the body-side unit. It is noted that the technical feature described in the form (3) is applicable to a suspension apparatus without the above-indicated projecting-portion-displacement permitting mechanism. Accordingly, an arrangement in which the feature of the form (3) is employed in such a suspension apparatus also relates to a practical suspension apparatus, and can be the claimable invention.

(4) The suspension apparatus according to any one of the above forms (1)-(3), wherein the projecting-portion-displacement permitting mechanism is a body-side-unit-downward-displacement permitting mechanism for permitting a downward movement of the body-side unit relative to the mount portion.

In the form (4), the structure of the projecting-portion-displacement permitting mechanism is concretely limited. In short, the suspension apparatus according to the form (4) is equipped with a mechanism that permits the entirety of the body-side unit to be movable relative to the mount portion. Where the body-side unit is arranged to be movable downward as described in the form (4), the distance between the damping-force generating device and the hood can be easily increased.

(5) The suspension apparatus according to the above form (4), comprising a support member for fixedly supporting the body-side unit on the mount portion,
wherein the body-side-unit-downward-displacement permitting mechanism includes a supporting-force reducing device which is operable to reduce a supporting force exerted by the supporting member.

In the form (5), the structure of the body-side-unit-downward-displacement permitting mechanism is concretely limited. Where the body-side unit is supported by the support member, the body-side unit can be easily moved downward by reducing a supporting force exerted by the support member, as described in the form (5). In general, the body-side unit is supported by a support member called an upper support that is equipped with a rubber vibration damper. The form (5) is widely applicable to a suspension apparatus that employs such a support member.

(6) The suspension apparatus according to the above form (5), wherein the support member is a rubber member, and the supporting-force reducing device is configured to heat the support member.

In the form (6), the structure of the supporting-force reducing device is concretely limited. The form (6) is suitably applicable to a suspension apparatus that employs the support member having the above-indicated rubber vibration damper. More specifically explained, there may be employed a rubber support member in which is embedded a heat-generating resistance wire (heat element) such as a nichrome wire, for instance. By electrifying the heat-generating resistance wire, the support member is softened or burned through with heat, whereby the supporting force exerted by the support member can be easily reduced.

(7) The suspension apparatus according to the above form (5), wherein the support member is a rubber member, and the supporting-force reducing device is configured to cut the support member.

In the form (7), the structure of the supporting-force reducing device is concretely limited. The form (7) is suitably applicable to a suspension apparatus that employs the support member having the above-indicated rubber vibration damper. As will be explained below in detail, a blade-like member such as a cutter is provided on the hood, and the rubber support member is cut or pierced through with the blade-like member as a result of deformation of the hood, whereby the supporting force of the support member can be easily reduced. In the form (7), the rubber support member may be completely cut to such an extent that the supporting force is reduced to zero. Alternatively, the support member may be partially cut to such an extent that the supporting force is reduced to a certain degree but not to zero.

(8) The suspension apparatus according to the above form (5), wherein the support member is a rubber member which contains a fluid therein, and the supporting-force reducing device is configured to allow the fluid to be discharged from the support member.

In the form (8), the structure of the supporting-force reducing device is concretely limited. As the rubber vibration damper indicated above, there is available a fluid-filled type rubber vibration damper which contains a fluid therein for the purpose of improving and adjusting its vibration characteristics. The form (8) is suitably applicable to a suspension apparatus that employs the support member having such a fluid-filled type rubber vibration damper. As will be explained below in detail, a drilling member having a pointed top end is provided on the hood, and the support member is punctured with the pointed top end of the drilling member as a result of deformation of the hood, whereby the fluid contained in the rubber vibration damper can be discharged therefrom. Thus, the supporting force of the support member can be easily reduced.

(9) The suspension apparatus according to any one of the above forms (4)-(8), which is configured to allow a downward movement of the body-side unit relative to the mount portion and which comprises a movement-prohibiting device for prohibiting the downward movement of the body-side unit,
wherein the body-side-unit-downward-movement permitting mechanism includes a prohibition-releasing device for releasing the prohibition of the downward movement of the body-side unit by the movement-prohibiting device.

In the form (9), the structure of the body-side-unit-downward-movement permitting mechanism is concretely limited. In short, in the form (9), the body-side unit is locked by a suitable locking member and is permitted to move downward by releasing the lock of the body-side unit by the locking member. According to the form (9), the body-side unit can be moved downward with a simple structure. The releasing of the lock of the body-side unit may be made by a suitable actuator. Alternatively, the releasing of the lock of the body-side unit may be made due to the impact on the hood, the deformation of the hood, or the like.

(10) The suspension apparatus according to any one of the above forms (4)-(9), which comprises an elastic member and a hydraulic damper disposed parallel to each other and which is configured such that the body-side unit is elastically supported on the mount portion by the elastic member and the hydraulic damper,
wherein the body-side-unit-downward-movement permitting mechanism includes a damping-force reducing device for reducing a damping force generated by the hydraulic damper, and
wherein the body-side-unit-downward-movement permitting mechanism is configured to permit the downward movement of the body-side unit relative to the mounting portion owing to a reduction in the damping force by the damping-force reducing device.

In the form (10), the projecting-portion-displacement permitting mechanism indicated above is constituted utilizing the above-described structure in which the body-side unit is elastically supported. The "hydraulic damper" may be constructed to have a housing and a piston that is disposed in the housing so as to divide an interior space of the housing into two fluid chambers, for instance. The thus constructed hydraulic damper may be arranged to permit a fluid flow between the two fluid chambers as a result of a movement of the piston in the housing and to restrict the fluid flow between the two fluid chambers. In the thus constructed hydraulic damper, the damping force exerted by the damper can be reduced by allowing the fluid to relatively freely flow between the two chambers. As explained below in detail, there is included, in the form (10), an arrangement wherein the body-side unit is supported with a sufficiently high degree of supporting force in a state in which the fluid flow between the two fluid chambers is restricted while the body-side unit is permitted to be moved as a result of a reduction in the supporting force in a state in which the relatively free fluid flow between the two fluid chambers is allowed.

(11) The suspension apparatus according to any one of the above forms (4)-(10), comprising a body-side-unit-forcibly-moving mechanism for forcibly moving, downward, the body-side unit that is permitted to move downward by the body-side-unit-downward-movement permitting mechanism.

Where the body-side unit that is permitted to move downward is forcibly moved according to the form (11), the distance between the damping-force generating device and the hood can be increased with higher reliability. In the form (11), the structure of the body-side-unit-forcibly-moving mechanism is not specifically limited, but there may be employed any suitable structure that enables the body-side unit to move downward by application of a certain controllable force thereto.

(12) The suspension apparatus according to the above form (11), the body-side-unit-forcibly-moving mechanism includes an actuator and is operable to forcibly move the body-side unit downward by a drive force generated by the actuator.

As the "actuator" recited in the form (12), there may be employed an electric motor, a hydraulic cylinder device, or the like. Where an actuator whose operation is controllable is employed, for instance, the body-side unit can be forcibly moved downward at any desired or arbitrary timing, thereby assuring a significantly high degree of impact mitigating function.

(13) The suspension apparatus according to the above form (12), comprising: (a) an external thread portion and an internal thread portion which engage each other and one of which is provided in the wheel-side unit immovably in an upward and downward direction while the other of which is provided in the body-side unit immovably in the upward and downward direction, the external thread portion and the internal thread portion rotating relative to each other associated with the relative movement of the wheel-side unit and the body-side unit; and (b) a motor which applies a relative rotational torque to the external thread portion and the internal thread portion for thereby giving the resistance to the relative movement of the wheel-side unit and the body-side unit,
wherein the motor functions as the actuator of the body-side-unit-forcibly-moving mechanism.

The form (13) is effective in the electromagnetic suspension apparatus explained above. For instance, the electromagnetic suspension apparatus is equipped with a motor as an actuator for controllably operating the suspension cylinder. Where the motor is utilized as the actuator of the body-side-unit-forcibly-moving mechanism as in the form (13), there is no need of additionally providing the actuator. According to the form (13), therefore, it is possible to realize a practical suspension apparatus.

(14) The suspension apparatus according to any one of the above forms (11)-(13), wherein the body-side-unit-forcibly-moving mechanism is operable to forcibly move the body-side unit downward when a collision of the vehicle is detected.

According to the form (14), the body-side unit can be forcibly moved downward at a time point when the vehicle comes into contact with a pedestrian or the like. This arrangement reliably assures an effect of mitigating the impact that the pedestrian or the like receives in an instance where the pedestrian or the like comes into contact with the hood from above due to the contact of the vehicle with the pedestrian or the like. A collision of the vehicle may be detected by a sensor or the like arranged to detect a contact of a certain object with a bumper, etc., for instance. In this connection, the technical feature that the body-side-unit-forcibly-moving mechanism is operated upon detection of the collision of the vehicle is applicable to the above-indicated projecting-portion-displacement permitting mechanism. That is, in connection with or irrespective of the form (14), the projecting-portion-displacement permitting mechanism may be configured to permit a displacement of at least the projecting portion upon detection of the collision of the vehicle.

(15) The suspension apparatus according to any one of the above forms (11)-(14), wherein the body-side-unit-forcibly-moving mechanism is operable to forcibly move the body-side unit downward when a collision of the vehicle is anticipated.

According to the form (15), the body-side unit can be forcibly moved downward at a time point when there is a high possibility of contacting of the vehicle with the pedestrian or the like. This arrangement reliably assures an effect of mitigating the impact that the pedestrian or the like receives in an instance where the pedestrian or the like comes into contact with the hood from above due to the contact of the vehicle with the pedestrian or the like. The collision of the vehicle may be anticipated based on images recognized by a camera, etc., or based on changes in a distance between the vehicle and an object with which the vehicle will come into contact, which changes are obtained by radar, a distance sensor or the like. In this connection, the technical feature that the body-side-unit-forcibly-moving mechanism is operated when the collision of the vehicle is anticipated is applicable to the above-indicated projecting-portion-displacement permitting mechanism. That is, in connection with or irrespective of the form (15), the projecting-portion-displacement permitting mechanism may be configured to permit a displacement of at least the projecting portion when the collision of the vehicle is anticipated.

(16) The suspension apparatus according to any one of the above forms (11)-(15), wherein the body-side-unit-forcibly-moving mechanism has a function of returning, upward, the body-side unit which has been forcibly moved downward.

When the body-side unit is forcibly moved downward, the damping-force generating device is usually placed in a state different from its normal state. According to the form (16), therefore, the damping-force generating device, namely, the suspension apparatus, can be easily returned to the normal state. Even though the body-side unit is forcibly moved when the vehicle contacts the pedestrian or the like or when there is a high possibility of contact of the vehicle with the pedestrian or the like, the pedestrian or the like may not actually contact the hood or the vehicle may not actually contact the pedestrian or the like. In such instances, according to the form (16), the damping-force generating device can be promptly returned to the normal state, thereby enhancing the convenience of the suspension apparatus. Where the body-side-unit-forcibly-moving mechanism is equipped with an actuator, the above-indicated returning function can be realized by allowing the body-side unit to be moved upward by the actuator.

In the form (16), the above-indicated projecting-portion-displacement permitting mechanism may be configured to have a function of releasing permission of displacement of at least the projecting portion of the body-side unit after the body-side unit has been returned upward. It is noted that the projecting-portion-displacement permitting mechanism having such a function may be employed irrespective whether it has the body-side-unit-forcibly-moving mechanism.

(17) The suspension apparatus according to any one of the above forms (1)-(3), wherein the projecting-portion-displacement permitting mechanism is a projecting-portion-inclination permitting mechanism for permitting an inclination of the projecting portion of the body-side unit.

In the form (17), the structure of the projecting-portion-displacement permitting mechanism is concretely limited. For instance, there may be included, in the form (17), an arrangement in which only the protruding portion of the body-side unit can be displaceable. Where the projecting portion is configured to be inclinable as in the form (17), the distance between the upper end of the damping-force generating device and the above-indicated hood can be easily increased.

(18) The suspension apparatus according to the above form (17), comprising: (a) an external thread portion and an internal thread portion which engage each other and one of which is provided in the wheel-side unit immovably in an upward and downward direction while the other of which is provided in the body-side unit immovably in the upward and downward direction, the external thread portion and the internal thread portion rotating relative to each other associated with the relative movement of the wheel-side unit and the body-side unit; and (b) a motor which is disposed at the upper end of the body-side unit as one constituent element thereof and which applies a relative rotational torque to the external thread portion and the internal thread portion for thereby giving the resistance to the relative movement of the wheel-side unit and the body-side unit,
wherein the projecting-portion-inclination permitting mechanism is operable to permit an inclination of the motor.

The form (18) is effective in the above-indicated electromagnetic suspension apparatus. As explained above, in the electromagnetic suspension apparatus, the body-side unit often has a motor as a constituent element thereof provided on the projecting portion, which motor functions as an actuator for controllably operating the suspension cylinder. In this instance, where the motor is permitted to be inclined according to the form (18), it is possible to easily increase the distance between the motor and the above-indicated hood, namely, the distance between the upper end of the damping-force generating device and the hood.

(19) The suspension apparatus according to any one of the above forms (1)-(18), comprising a projecting-portion-forcibly-displacing mechanism for forcibly displacing at least the projecting portion of the body-side unit that is permitted to displace by the projecting-portion-displacement permitting mechanism.

By forcibly displacing at least the projecting portion of the body-side unit that is permitted to displace, as described in the form (19), the space between the upper end of the damping-force generating device and the hood can be enlarged with higher reliability. In the form (19), the structure of the "projecting-portion-forcibly-displacing mechanism" is not specifically limited. There may be employed any structure that displaces at least the projecting portion of the body-side unit by application of a certain controllable force thereto, such that the amount of projection of the projecting portion from the mount portion decreases. It is noted that the body-side-unit-forcibly-moving mechanism in an instance where the projecting-portion-displacement permitting mechanism is the body-side-unit-downward-movement permitting mechanism belongs to a subordinate conception of the projecting-portion-forcibly-displacing mechanism according to the form (19). In an instance where the projecting-portion-displacement permitting mechanism is the above-indicated projecting-portion-inclination permitting mechanism, for instance, the projecting-portion-forcibly-displacing mechanism may be made as a projecting-portion-forcibly-inclining mechanism which forcibly inclines the projecting portion.

(20) The suspension apparatus according to the above form (19), the projection-portion-forcibly-displacing mechanism includes an actuator and is operable to forcibly displace at least the projecting portion of the body-side unit by a drive force generated by the actuator.

As the "actuator" in the form (20), there may be employed an electric motor, a hydraulic cylinder, or the like, as in the body-side-unit-forcibly-moving mechanism explained above. Where an actuator whose operation is controllable, for instance, at least the projecting portion of the body-side unit can be forcibly displaced at any desired or arbitrary timing, thereby assuring a significantly high degree of impact mitigating function.

(21) The suspension apparatus according to the above form (19) or (20), wherein the projecting-portion-forcibly-displacing mechanism is operable to forcibly displace at least the projecting portion of the body-side unit when a collision of the vehicle is detected.

According to the form (21), at least the projecting portion of the body-side unit can be forcibly displaced at a time point when the vehicle comes into contact with a pedestrian or the like, as in the body-side-unit-forcibly-moving mechanism. This arrangement reliably assures an effect of mitigating the impact that the pedestrian or the like receives in an instance where the pedestrian or the like comes into contact with the hood from above due to the contact of the vehicle with the pedestrian or the like. As in the body-side-unit-forcibly-moving mechanism, a collision of the vehicle may be detected by a sensor or the like arranged to detect a contact of a certain object with a bumper, etc., for instance.

(22) The suspension apparatus according to the above form (19) or (20), wherein the projecting-portion-forcibly-displacing mechanism is operable to forcibly displace at least the projecting portion of the body-side unit when a collision of the vehicle is anticipated.

According to the form (22), at least the projecting portion of the body-side unit can be forcibly moved downward at a time point when there is a high possibility of contact of the vehicle with the pedestrian or the like, as in the body-side-unit-forcibly-moving mechanism. This arrangement reliably assures an effect of mitigating the impact that the pedestrian or the like receives in an instance where the pedestrian or the like comes into contact with the hood from above due to the contact of the vehicle with the pedestrian or the like. As in the body-side-unit-forcibly-moving mechanism, a collision of the vehicle may be anticipated based on images recognized by a camera, etc., or based on changes in a distance between the vehicle and an object with which the vehicle will come into contact, which changes are obtained by radar, a distance sensor or the like.

(23) The suspension apparatus according to any one of the above forms (19)-(22), wherein the projecting-portion-forcibly-displacing mechanism has a function of returning at least the projecting portion of the body-side unit which has been forcibly displaced.

Where at least the projecting portion of the body-side unit is displaced, the damping-force generating device is usually placed in a state different from its normal state. According to the form (23), therefore, the damping-force generating device, namely, the suspension apparatus, can be easily returned to the normal state. The returning function in the form (23) belongs to a super-ordinate concept of the returning function of the body-side-unit-forcibly-moving mechanism explained above. For the same reasons explained above with respect to the returning function of the body-side-unit-forcibly-moving mechanism, the form (23) assures improved convenience of the suspension apparatus. Where the projecting-portion-forcibly-displacing mechanism has an actuator, the above-indicated returning function is realized by permitting at least the projecting portion of the body-side unit to return by the actuator. The form (23) may also be arranged to have a function of releasing the permission of the displacement of at least the projecting portion of the body-side unit after at least the projecting portion of the body-side unit has been returned.

(24) The suspension apparatus according to any one of the above forms (1)-(23), which is to be installed on a vehicle having a hood disposed at a position that is above the mounting portion and that is spaced apart from the upper end of the body-side unit and which comprises an impact-absorbing member (92; 178) which is disposed between the hood and the part of the vehicle body at which the mount portion is formed, for absorbing an impact that acts on the hood.

In the form (24), the above-indicated projecting-portion-displacement permitting mechanism is included in an arrangement in which an impact-absorbing member is disposed between the hood and the part of the vehicle body at which the mount portion is formed. (The impact-absorbing member may be referred to as a "cushioning member".) According to the form (24), since the distance between the upper end of the body-side unit and the hood can be increased by the projecting-portion-displacement permitting mechanism, it is possible to increase a stroke for the impact absorption by the impact-absorbing member, whereby the impact-absorbing member can effectively absorb the impact acting on the hood. That is, the impact that the pedestrian or the like receives can be effectively mitigated where the impact arises from the contact of the pedestrian or the like with the hood.

In the form (24), the structure of the "impact-absorbing member" is not particularly limited. It is possible to employ ordinary impact-absorbing materials such as resin foamed materials including urethane, styrene, and the like. Further, there may be provided, on at least one of the hood and the part of the vehicle body, at least one rib that can be plastically deformed in accordance with deformation of the hood, at least one plastically deformable structural body or the like, whereby the impact can be absorbed utilizing a load required for the plastic deformation of the at least one rib, the at least one structural body or the like. In this instance, the at least one rib, the at least one structural body or the like functions as the impact-absorbing member.

### BRIEF DESCRIPTION OF THE DRAWINGS

Fig. 1 is a front elevation in cross section showing a suspension apparatus for a vehicle according to a first embodiment;

Fig. 2 is a view showing a state in which a body-side unit shown in Fig. 1 is moved downward;

Fig. 3 is a flow chart indicating a body-side-unit-movement control program executed by a suspension electronic control unit shown in Fig. 1;

Fig. 4 is a flow chart indicating a body-side-unit-downward-movement processing routine that partly constitutes the body-side-unit-movement control program shown in Fig. 3;

Fig. 5 is a flow chart indicating a body-side-unit returning processing routine that partly constitutes the body-side-unit-movement control program shown in Fig. 3;

Fig. 6 is a front elevation in cross section showing a suspension apparatus for a vehicle according to a second embodiment;

Fig. 7 is a front elevation in cross section showing a suspension apparatus for a vehicle according to a third embodiment;

Fig. 8 is a front elevation in cross section showing a suspension apparatus for a vehicle according to a fourth embodiment;

Fig. 9 is a flow chart indicating a supporting-force-reducing control program executed by a suspension electronic control unit shown in Fig. 8;

Fig. 10 is a front elevation in cross section showing a suspension apparatus for a vehicle according to a fifth embodiment;

Fig. 11 is a front elevation in cross section showing a suspension apparatus for a vehicle according to a sixth embodiment;

Fig. 12 is a front elevation in cross section showing a suspension apparatus for a vehicle according to a seventh embodiment;

Fig. 13 is a front elevation in cross section showing a suspension apparatus for a vehicle according to an eighth embodiment;

Fig. 14 is a view showing a state in which a motor shown in Fig. 13 is inclined; and

Fig. 15 is a front elevation in cross section showing a suspension apparatus for a vehicle according to a ninth embodiment.

### BEST MODE FOR CARRYING OUT THE INVENTION

There will be described in detail some embodiments of the present invention, referring to the drawings. It is to be understood, however, that the invention is not limited to the following embodiments but may be embodied with various changes and modifications, such as those described in the FORMS OF THE INVENTION, which may occur to those skilled in the art.

### 1. First embodiment

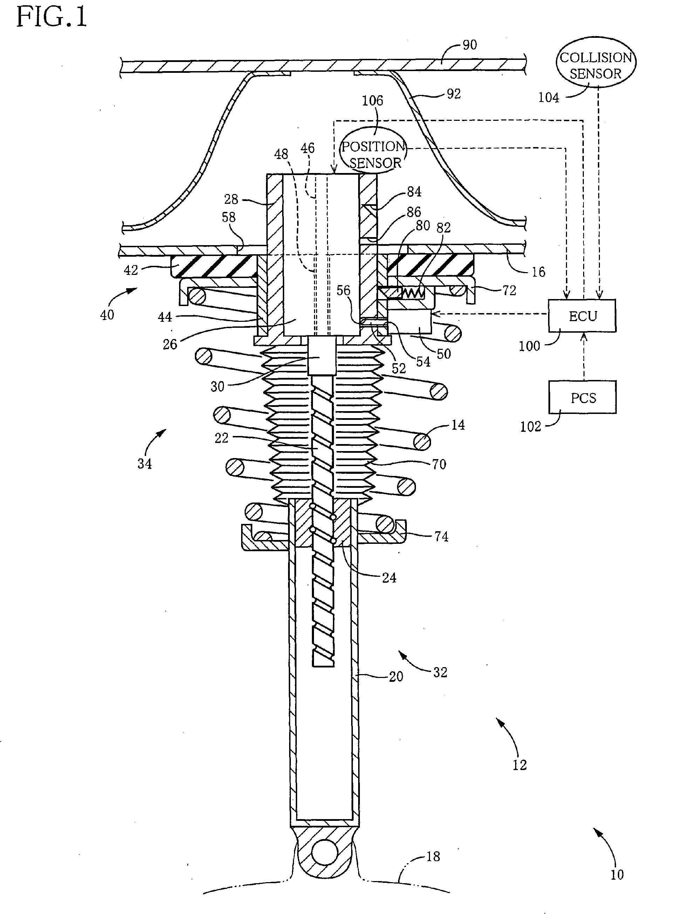

Fig. 1 shows a suspension apparatus 10 for a vehicle according to one embodiment of the present invention. The suspension apparatus 10 includes a suspension cylinder 12 as a damping-force generating device and a coil spring 14 as a suspension spring. The suspension cylinder 12 is coupled to a mount portion 16 functioning as an attaching portion and formed at a part of a vehicle body and a suspension lower arm 18 as a wheel-holding member for holding a wheel. The suspension cylinder 12 damps a vibration of the vehicle body generated by expansion and contraction of the spring 14.

The suspension cylinder 12 is constituted by including a cylinder 20 as a cylindrical housing coupled to the suspension lower arum 18 and a rod 22 disposed in the cylinder 20 and protruding upward from an upper end portion of the cylinder 20. The rod 22 is formed with an external thread that engages a nut 24 which is provided at an upper end of an inner cylindrical wall of the cylinder 20 so as to be immovable in an upward and downward direction and which holds bearing balls. The suspension cylinder 12 further includes a motor 26 (an electric motor) and functions as an electromagnetic actuator. The motor 26 is fixedly accommodated in a motor casing 28, and a motor shaft 30 which is a rotational shaft of the motor 28 is connected integrally to an upper end of the rod 22. The suspension cylinder 12 is configured such that a wheel-side unit 32 is constituted by including the cylinder 20 while a body-side unit 34 is constituted by including the motor 26, the motor casing 28, and the rod 22. The wheel-side unit 32 is coupled to the suspension lower arm 18 and the body-side unit 34 is attached to the mount portion 16. The rod 22 and the nut 24 constitute a ball screw mechanism and respectively function as an external thread portion of the body-side unit 34 and an internal thread portion of the wheel-side unit 32.

The body-side unit 34 is attached to the mount portion 16 while being supported by an upper support 40. More specifically described, the upper support 40 is constituted by including an annular rubber vibration damper 42 fixed to an underside of the mount portion 16 and a cylindrical holder 44 fixed to an inner peripheral portion of the rubber vibration damper 42. The body-side unit 34 is held by the upper support 40 with the motor casing 28 loosely fitted in the holder 44, whereby the body-side unit 34 is attached to the mount portion 16. The motor casing 28 and the holder 44 are formed with a guide 46 and a guide groove 48, respectively, which extend in the upward and downward direction, whereby the body-side unit 34 is configured to be unrotatable and movable in the upward and downward direction, relative to the mount portion 16. The motor casing 28 has a diameter which is larger at its lower portion than at its middle portion. The lower portion of the motor casing 28 functions as a stopper for limiting an upward movement of the body-side unit 34. The body-side unit 34 is prohibited from moving upward by abutting contact of the lower portion of the motor casing 28 with a lower surface of the holder 44. The upper support 40 is provided with a solenoid 50 that is fixedly disposed at a lower portion of an outer circumferential surface of the holder 44. The solenoid 50 has a pin 52 and is configured such that the pin 52 is retracted upon energization. In the meantime, the holder 44 and the motor casing 28 are formed with respective pin holes 54, 56 which are coaxial with each other when the motor casing 28 is located at its uppermost position, and the pin 52 of the solenoid 50 is inserted into the pin hole 56 through the pin hole 54. In this state, the body-side unit 34 is located at its uppermost position and prohibited from moving downward. The state in which the body-side unit 34 is located at its uppermost position is a normal state. In the normal state, respective upper portions of the motor 26 and the motor casing 28 penetrate an opening 58 formed in the mount portion 16 and project upward from the mount portion 16. The portions of the motor 26 and the motor casing 28 that project upward from the mount portion 16 function as a projecting portion of the body-side unit 34.

Between the motor casing 28 and the cylinder 20, there is disposed a bellows-like boot 70 which covers the rod 22 and which is connected at its opposite ends to the motor casing 28 and the cylinder 20, respectively. The boot 70 prevents sands, water and the like from adhering to the rod 22 and entering an interior of the cylinder 20. The coil spring 14 is supported while being sandwiched by and between: an annular upper retainer 72 which constitutes a part of the upper support 40 and which is provided on the holder 44; and a lower retainer 74 which is fixedly provided on an outer circumferential portion of the cylinder 20.

In the thus constructed suspension apparatus 10, when the part of the vehicle body and the wheel move relative to each other, the cylinder 20 and the rod 22 can be moved relative to each other in an axial direction while involving rotation of the rod 22 relative to the cylinder 20, together with rotation of the motor shaft 30. That is, as the part of the vehicle body and the wheel move toward and away from each other, the wheel-side unit 32 and the body-side unit 34 can be moved relative to each other and the suspension cylinder 12 can be telescopically moved. With application of a rotational torque to the rod 22 by driving the motor 26, a relative rotational torque can be applied to the external thread formed on the rod 22 and the nut 24. By making a direction and a magnitude of the relative rotational torque appropriate, it is possible to generate a proper resistance force in a direction in which the relative movement of the wheel-side unit 32 and the body-side unit 34 is inhibited, against the relative movement. This resistance force corresponds to a damping force with respect to the relative movement of the part of the vehicle body and the wheel. While the damping-force generating function of the suspension cylinder 12 may be considered to be passive, the suspension cylinder 12 in the present embodiment can be operated actively. That is, it is possible to permit the suspension cylinder 12 to exhibit a function of stabilizing a posture of the vehicle body and a function of adjusting a height of the vehicle, by positively moving the wheel-side unit 32 and the body-side unit 34 relative to each other by rotation of the motor 26. A detailed explanation of those functions is dispensed with. The suspension apparatus 10 of the present embodiment equipped with such a suspension cylinder 12 may be called an electromagnetic suspension apparatus.

When the suspension apparatus 10 of the exemplary embodiment is in the normal state indicated above, the upper end of the body-side unit 34 is made as the projecting portion that projects upward from the mount portion 16. In this state, when the solenoid 50 is energized, the pin 52 is retracted and withdrawn from the motor casing 28. As explained above, the motor casing 28 is loosely fitted in the holder 44 and therefore the body-side unit 34 is configured to be movable downward. When the pin 52 is withdrawn from the motor casing 28, the body-side unit 34 is permitted to move downward. That is, in the vehicle suspension apparatus 10 of the exemplary embodiment, a movement-prohibiting device for prohibiting the downward movement of the body-side unit 34 is constituted by including the pin 52 while a prohibition-releasing device for releasing the prohibition of the downward movement of the body-side unit 34 is constituted by including the solenoid 50. Further, a body-side-unit-downward-movement permitting mechanism (hereinafter abbreviated as "downward-movement permitting mechanism" where appropriate) for permitting the downward movement of the body-side unit 34 relative to the mount portion 16 is constituted by including the solenoid 50. This downward-movement permitting mechanism is one type of a projecting-portion-displacement permitting mechanism for permitting a movement of the body-side unit 34 in such a manner that an amount of projection, from the mount portion 16, of the upper end of the body-side unit 34 as the projecting portion decreases.

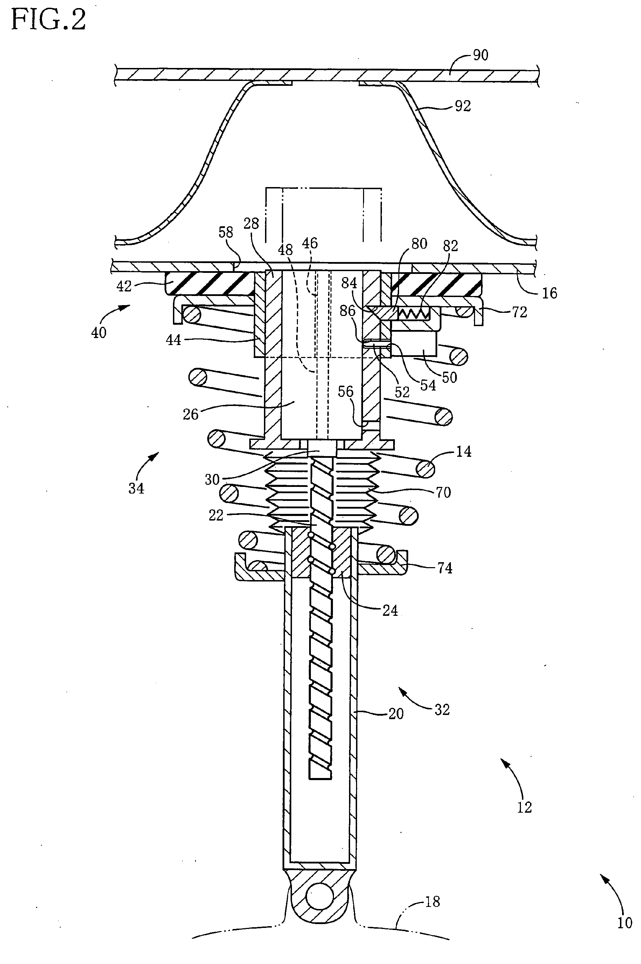

In the present vehicle suspension apparatus 10, when the motor 26 is rotated in a direction in which the rod 22 moves downward relative to the cylinder 20, with the pin 52 withdrawn from the pin hole 56 of the motor casing 28, the body-side unit 34 moves downward as shown in Fig. 2. That is, the vehicle suspension apparatus 10 of the present embodiment is equipped with a body-side-unit-forcibly-moving mechanism (hereinafter abbreviated as "forcibly-moving mechanism" where appropriate") for forcibly moving the body-side unit 34 which is permitted to move downward. The forcibly-moving mechanism is one type of the projecting-portion-forcibly-displacing mechanism. In this connection, the motor 26 functions as an actuator for driving the forcibly-moving mechanism.

The upper support 40 is provided with an engaging claw 80 which is biased toward the motor casing 28 by a spring 82. When the body-side unit 34 is moved downward by a predetermined amount, the engaging claw 80 is brought into engagement with an engaging groove 84 formed in the motor casing 28, thereby locking the body-side unit 34. A position at which the body-side unit 34 is locked by the engaging claw 80 is a retracted position which is a movable end of the body-side unit 34 in the downward direction. When the body-side unit 34 is located at the retracted position, the upper end of the body-side unit 34 does not project upward from the mount portion 16. In the present suspension apparatus 10, when the solenoid 50 is deenergized in a state in which the body-side unit 34 is located at the retracted position, the pin 52 is inserted into another pin hole 86 formed in the motor casing 28, whereby the body-side unit 34 is prohibited from moving relative to the mount portion 16. In the drawings, the solenoid 50 and the pin holes 56, 86 are located at the same position as the engaging claw 80 and the engaging groove 84 in a circumferential direction of the motor casing 28 and the holder 44, for easier understanding of the present suspension apparatus. Actually, the solenoid 50, etc., are spaced apart from the engaging claw 80, etc., by a certain angle in the circumferential direction.

In the present suspension apparatus 10, the body-side unit 34 which has been moved downward can be moved upward, namely, can be returned to the normal-state position form the retracted position. In returning the body-side unit 34 to the normal-state position, the solenoid 50 is initially energized and the pin 52 is withdrawn from the pin hole 86, thereby releasing the prohibition of the movement of the body-side unit 34. Subsequently, the motor 26 is rotated in a direction in which the rod 22 moves upward relative to the cylinder 20, so that the body-side unit 34 moves upward relative to the mount portion 16. On this occasion, the engaging claw 80 is retracted owing to an inclined surface of the engaging groove 84. The body-side unit 34 is moved up to a position where the lower end of the motor casing 28 comes into abutting contact with the holder 44. When the body-side unit 34 is located at that position, the solenoid 50 is deenergized, so that the pin 52 is inserted into the pin hole 56. Thus, the body-side unit 34 is prohibited from moving. In this way, the body-side unit 34 is returned to the normal-state position. In other words, the above-indicated forcibly-moving mechanism constituted by including the motor 26, etc., has a function of returning the body-side unit 34 which has been moved downward, up to the normal-state position.

In a state in which the body-side unit 34 is located at the retracted position, a range of the telescopic movement of the suspension cylinder 12, namely, a range of the relative movement of the body-side unit 34 and the wheel-side unit 32, is reduced as compared with that when the body-side unit 34 is located at the normal-state position. The suspension cylinder 12 is telescopically moved within the reduced range and generates an appropriate damping force within the range.

In the present vehicle suspension apparatus 10, the mount portion 16 is covered with a bonnet 90 which is one sort of a hood and which is disposed above the mount portion 16 so as to be spaced apart therefrom. On an underside of the bonnet 90, ribs 92 are provided so as to be disposed between the bonnet 90 and the part of the vehicle body at which the mount portion 16 is formed. The ribs 92 are arranged to deform in an instance where a pedestrian contacts the bonnet 90 from above upon collision of the pedestrian with the vehicle, for instance. Thus, each of the ribs 92 functions as a cushioning member for mitigating an impact that the pedestrian receives. In the present suspension apparatus 10, the upper end of the body-side unit 34 projects upward from the mount portion 16 when the body-side unit 34 is located at the normal-state position. From the standpoint of mitigating the impact described above, the existence of the projecting portion is a factor that hinders the impact mitigating function. Therefore, the present suspension apparatus 10 is configured such that the above-indicated downward-movement permitting mechanism and forcibly-moving mechanism are operated when a collision of the vehicle is detected or when a collision of the vehicle is anticipated, as will be explained in greater detail.

A control of the operation of the above-indicated downward-movement permitting mechanism and the forcibly-moving mechanism (hereinafter referred to as "body-side-unit-movement control" where appropriate), more specifically, a control of the solenoid 50 and the motor 26, is executed by a suspension electronic control unit (hereinafter referred to as "suspension ECU" or "ECU" where appropriate) 100. The ECU 100 is constituted principally by a computer including a CPU, a ROM, a RAM, a bus, an I/O (input/output interface), and the like, and also includes drivers for the motor 26, the solenoid 50 and so on. The above-indicated motor 26 and solenoid 50 are connected to the I/O of the computer via the respective drivers. To the I/O, there are connected a vehicle pre-crash safety system (PCS) for anticipating a collision of the vehicle, a collision sensor 104, a position sensor 106 for detecting a position of the body-side unit 34 relative to the mount portion 16 in the upward and downward direction, etc. The ECU 100 is configured to be capable of receiving various information obtained by the PCS, the sensors 104, 106, etc., in executing the body-side-unit-movement control. The collision sensor 104 is disposed on a bumper and configured to transmit, to the ECU 100, a signal indicative of a collision of the vehicle when the vehicle comes into contact with a certain object. The vehicle pre-crash safety system 102 is constituted by including radar, computers, etc., and configured to identify an object existing ahead of the vehicle and anticipate a possibility of collision of the identified object with the vehicle. When the possibility of the collision of the identified object with the vehicle becomes high, the system 102 transmits, to the ECU 100, a signal indicating that there is a possibility of collision.

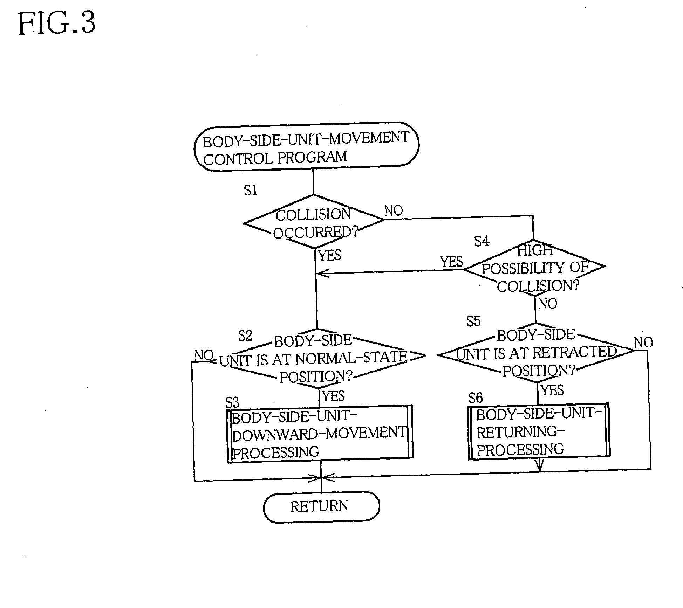

The body-side-unit-movement control by the ECU 100 is carried out by implementation of a body-side-unit-movement control program indicated by a flow chart of Fig. 3. The control program is stored in the ROM of the computer of the ECU 100 and repeatedly implemented at short time intervals (e.g., time intervals ranging from several milliseconds to several tens of milliseconds) after an ignition switch has been placed in an ON state. Hereinafter, there will be explained in order details of the control in the present suspension apparatus 100 referring to the flow chart of Fig. 3.

In the body-side-unit-movement control, Step S1 ("step" is omitted where appropriate) is initially implemented to judge whether the collision sensor 104 is transmitting a signal indicating that a certain object has collided with the vehicle. Where the collision sensor 104 is transmitting the signal indicating the collision, S2 is implemented to judge, based on information obtained by the position sensor 106, whether the body-side unit 34 is located at the normal-state position. Where the body-side unit 34 is located at the normal-state position, there is executed a body-side-unit-downward-movement processing routine of S3 which will be described in detail, so that the body-side unit 34 is moved downward. Where it is judged in S2 that the body-side unit 34 is not located at the normal-state position, this means that the body-side unit 34 is moving downward or has been already located at the retracted position. Therefore, S3 is skipped.

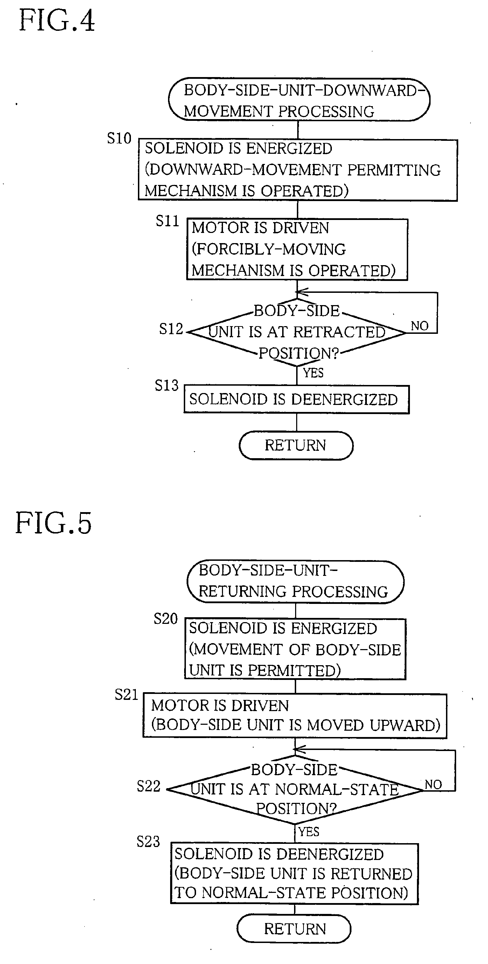

In the body-side-unit-downward-movement processing routine, there is implemented processing indicated by a flow chart of Fig. 4. The routine is executed according to time-division processing, in parallel with implementation of the body-side-unit-downward-movement control program. Initially, in S10, the solenoid 50 is energized, whereby the pin 52 is withdrawn from the pin hole 56 of the motor casing 28 and the body-side unit 34 is permitted to move downward. Subsequently, in S11, the motor 26 is rotated in a direction in which the rod 22 moves downward relative to the cylinder 20, whereby the body-side unit 34 is forcibly moved downward. S11 is followed by S12 in which it is judged whether the body-side unit 34 has been located at the retracted position, based on information obtained by the position sensor 106. After the body-side unit 34 has been located at the retracted position, S13 is implemented to deenergize the solenoid 50 which has been energized in S11, whereby the pin 52 is inserted into the pin hole 86 and the body-side unit 34 is prohibited from moving at the retracted position. The operation of the above-indicated downward-movement permitting mechanism and forcibly-moving mechanism by implementation of this routine has been explained above in detail, and an explanation of which is simplified here. The collision sensor 104 is configured to continue transmitting the signal indicative of the occurrence of collision of the vehicle once a certain object has collided with the vehicle. Accordingly, after the occurrence of collision, an affirmative decision YES is made in S1 and a negative decision NO is made in S2, so that the body-side unit 34 remains located at the retracted position.

Where it is judged in S1 that a collision has not occurred, S4 is implemented to make a judgment on the basis of a signal transmitted from the vehicle pre-crash safety system 102. Where it is judged in S4 that the vehicle pre-crash safety system 102 is transmitting a signal indicating that there is a possibility of collision, the above-indicated judgment of S2 is implemented. Where it is judged in S2 that the body-side unit 34 is located at the normal-state position, the body-side-unit-downward-movement processing routine of S3 explained above is executed. Where it is judged in S2 that the body-side unit 34 is not located at the normal-state position, the routine of S3 is skipped as explained above.

Where it is judged in S4 that the vehicle pre-crash safety system 102 is not transmitting the signal indicating that there is a possibility of collision, S5 is implemented to judge whether the body-side unit 34 is located at the retracted position, on the basis of information obtained by the position sensor 106. Where it is judged in S5 that the body-side unit 34 is located at the retracted position, this means that the body-side-unit-downward-movement processing routine of S3 has been already executed. Accordingly, it is considered that the possibility of collision has been lowered, namely, a collision will not occur. In this instance, there is executed in S6 a body-side-unit-returning routine indicated by a flow chart of Fig. 5.

Like the above-indicated body-side-unit-downward-movement processing routine, the body-side-unit-returning processing routine is executed according to time division processing, in parallel with execution of the body-side-unit-movement control program. The body-side-unit-returning processing routine is for returning the body-side unit 34 which has been moved to the retracted position to the normal-state position. The routine starts with S20 in which the solenoid 50 is energized to thereby withdraw the pin 52 from the motor casing 28, thus permitting a movement of the body-side unit 34. S20 is followed by S21 in which the motor 26 is rotated, thereby moving the body-side unit 34 upward. Subsequently, it is judged in S22 whether the body-side unit 34 has been located at the normal-state position. After the body-side unit 34 has been located at the normal-state position, S23 is implemented to deenergize the solenoid 50 and the pin 52 is inserted into the pin hole 56, whereby the body-side unit 34 is prohibited from moving at the normal-state position. Thus, the execution of the body-side-unit-returning routine is completed. The operation of the above-indicted downward-movement permitting mechanism and forcibly-moving mechanism by execution of this routine has been explained above in detail, and an explanation of which is simplified here.

By execution of the body-side-unit-movement control program described above, the body-side unit is forcibly moved downward upon occurrence of collision of the vehicle with a pedestrian, for instance. Further, the body-side unit is forcibly moved downward when there is a high possibility of collision of the vehicle with the pedestrian and is returned to the normal-state position when the possibility of collision becomes low.

The vehicle suspension apparatus 10 according to the present embodiment is equipped with a mechanism for forcibly moving, downward, the body-side unit 34 that has been permitted to move downward by the body-side-unit-downward-movement permitting mechanism, owing to a drive force of the motor 26 as an actuator. Instead of employing the forcibly-moving mechanism, the body-side unit 34 which has been permitted to move downward may be configured to move downward by its own weight. Alternatively, the body-side unit 34 may be configured to move downward by an impact upon the bonnet 90, deformation of the bonnet 90, etc.

### 2. Second embodiment

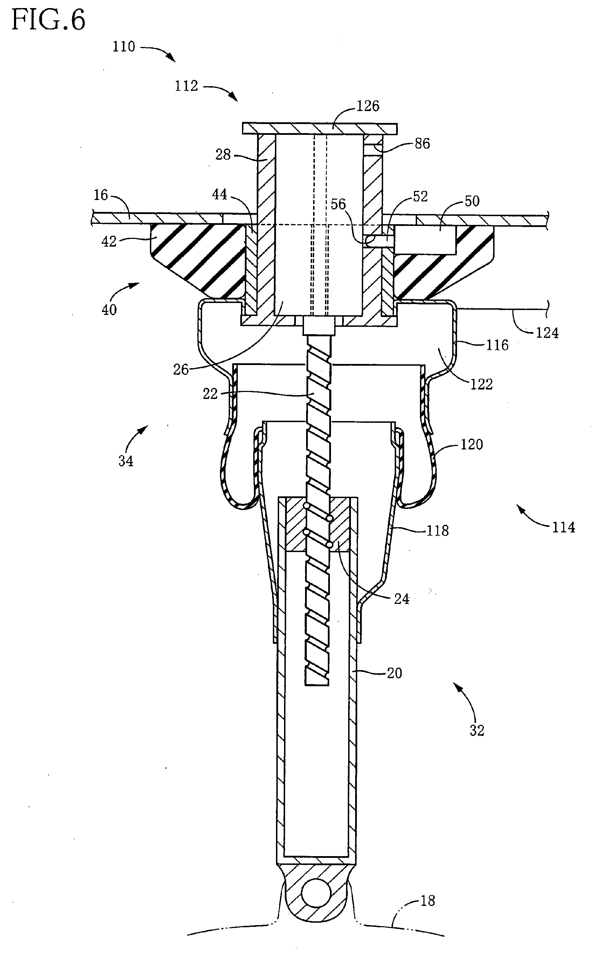

Fig. 6 shows a suspension apparatus 110 according to a second embodiment. Like the suspension apparatus 10 of the illustrated first embodiment, the suspension apparatus 110 of the second embodiment is the electromagnetic suspension apparatus which has the motor and in which the body-side unit and the wheel-side unit are coupled by the ball screw mechanism. Further, the suspension apparatus 100 is equipped with the body-side-unit-downward-movement permitting mechanism for permitting a downward movement of the body-side unit and the body-side-unit-forcibly-moving mechanism for forcibly moving the body-side unit downward. In the following description of the second embodiment, the same reference numerals as used in the apparatus of the first embodiment are used to identify the corresponding components, and a detailed explanation of which is omitted or simplified.

The vehicle suspension apparatus 110 is constituted by including a suspension cylinder 112 and an air spring 114 in place of the coil spring 14. The air spring 114 is constituted by including a frame 116 fixed to the holder 44, a frame 118 fixed to the cylinder 20, and a rolling diaphragm (hereinafter simply referred to as "diaphragm" where appropriate) 120 made of a rubber and disposed between the two frames 116, 118. The air spring 114 has a fluid-tightly sealed air chamber 122 which is defined by the frames 116, 118 and the diaphragm 120 and which is formed outwardly of the suspension cylinder 112. An air supply and exhaust device, not shown, is connected to the air chamber 122 via an air passage 124. An amount of the air in the air chamber 122 is changeable by the air supply and exhaust device. The present vehicle suspension apparatus 110 is configured as follows. In forcibly moving, downward, the body-side unit 34 which has been permitted to move downward by the body-side-unit-downward-movement permitting mechanism, the amount of the air in the air chamber 122 is decreased in accordance with the downward movement of the body-side unit 34. On the other hand, in returning the body-side unit to the normal state, the amount of the air in the air chamber 122 is increased. Unlike the upper support 40 in the first embodiment, the upper support 40 in the second embodiment is not provided with the engaging claw. Instead, there is provided, on an upper portion of the motor casing 28, an upper lid 126 whose diameter is larger than that of the motor casing 28. An outer circumferential portion of the upper lid 126 is configured to come into contact with an upper end of the holder 44, thereby functioning as a stopper for limiting the downward movement of the body-side unit 34.

### 3. Third embodiment

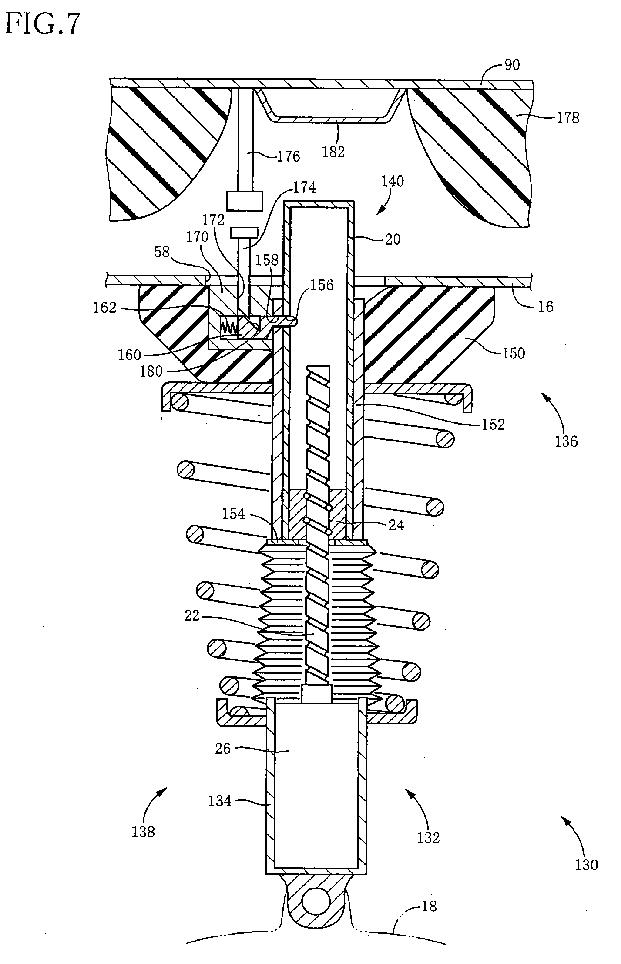

Fig. 7 shows a suspension apparatus 130 according to a third embodiment. Like the suspension apparatus 10 of the illustrated first embodiment, the suspension apparatus 130 of the third embodiment is the electromagnetic suspension apparatus which has the motor and in which the body-side unit and the wheel-side unit are coupled by the ball screw mechanism. Further, the suspension apparatus 130 is equipped with the body-side-unit-downward-movement permitting mechanism for permitting a downward movement of the body-side unit. In the following description of the third embodiment, the same reference numerals as used in the apparatus of the first embodiment are used to identify the corresponding components, and a detailed explanation of which is omitted or simplified.

The suspension apparatus 130 of the third embodiment has a suspension' cylinder 132 similar to the suspension cylinder 12 of the illustrated first embodiment. In the present suspension apparatus 130, a motor casing 134 for fixedly accommodating the motor 26 is coupled to the lower arm 18 while the cylinder 20 is supported by an upper support 136. That is, in the present suspension apparatus 130, a body-side unit 138 is constituted by including the motor 26, the motor casing 134, and the rod 22, while a body-side unit 140 is constituted by including the cylinder 20. The rod 22 and the nut 24 cooperate to each other to constitute the ball screw mechanism and respectively function as an external thread portion provided in the wheel-side unit 138 and an internal thread portion provided in the body-side unit 140.

The upper support 136 is constituted by including a rubber vibration damper 150 and a cylindrical holder 152. The cylinder 20 is loosely fitted in the holder 152 of the upper support 136. The cylinder 20 and the holder 152 are formed with a guide (not shown) and a guide groove (not shown), respectively, which extend in the upward and downward direction, whereby the cylinder 20 is configured to be unrotatable and movable in the upward and downward direction. The cylinder 20 has a lower lid 154 whose outer circumferential end portion is configured to come into contact with the holder 152 and thereby function as a stopper for limiting an upward movement of the cylinder 20. The cylinder 20 and the holder 152 are formed with respective pin holes 156, 158 which are coaxial with each other when the cylinder 20 is located at its uppermost position as a result of contacting of the lower lid 154 with a lower end of the holder 152. In the meantime, an engaging pin 160 is provided on an outer circumferential portion of the holder 152 such that the engaging pin 160 is biased by a spring 162 in a direction toward the cylinder 20. The engaging pin 160 is inserted into the pin holes 156, 158 indicated above. Such a state of the body-side unit 140 is a normal state in which the body-side unit 140 is prohibited from moving downward by a function of the engaging pin 160. In the normal state, an upper portion of the cylinder 20 penetrates the opening 58 formed in the mount portion 16 and projects upward from the mount portion 16. That portion of the cylinder 20 projecting upward from the mount portion 16 functions as a projecting portion of the body-side unit 140.

The above-described engaging pin 160 is accommodated in a casing 170 fixed to the outer circumferential portion of the holder 152. The casing 170 is formed, at its upper portion, with a retaining hole 172 within which a wedge pin 174 is retained while being fitted therein. The wedge pin 174 projects upward from the mount portion 16 formed at the part of the vehicle body for installing the body-side unit 140 thereon. The mount portion 16 is covered with the bonnet 90 disposed above the mount portion 16 so as to be spaced apart therefrom. On the underside of the bonnet 90, there is provided a plunger rod 176 which is fixed to a lower surface of the bonnet 90 and which extends to right above the wedge pin 174. There are disposed, on the underside of the bonnet 90, pad members 178 each of which is composed of a resin foamed member and functions as a cushioning member for mitigating an impact that the pedestrian receives.

On an occasion where the pedestrian comes into contact with the bonnet 90 from above due to a collision between the pedestrian and the vehicle that is equipped with the present suspension apparatus 130, for instance, the bonnet 90 is deformed, whereby the plunger rod 176 fixed to the lower surface of the bonnet 90 comes into contact with the wedge pin 174 and pushes the wedge pin 174 downward. The engaging pin 160 is formed with a recess 180 having an inclined surface which is opposed to an inclined surface formed at a leading end portion of the wedge pin 174. The wedge pin 174 pushed downward is brought into engagement with the recess 180, whereby the engaging pin 160 is retracted owing to an action of the inclined surfaces. As a result, the engaging pin 160 is withdrawn from the pin hole 156 of the cylinder 20. In this state, the body-side unit 140 is permitted to move downward. With further deformation of the bonnet 90, the rib 182 disposed on the underside of the bonnet 90 is brought into contact with the upper end of the cylinder 20. However, the body-side unit 140 is already permitted to move downward, so that the body-side unit 140 easily moves downward. Accordingly, the impact absorption by the deformation of the bonnet 90 is not hindered.

In the suspension apparatus 130 constructed as described above, a movement-prohibition device for prohibiting the downward movement of the body-side unit 140 relative to the mount portion 16 is constituted by including the engaging pin 160, etc., while a movement-prohibition-releasing device for releasing the prohibition of movement of the body-side unit 140 by the movement-prohibition device is constituted by including the wedge pin 174, the plunger rod 176, etc. Further, the present vehicle suspension apparatus 130 is equipped with the body-side-unit-downward-movement permitting mechanism for permitting the downward movement of the body-side unit 140 by the movement-prohibition-releasing device. The body-side-unit-downward-movement permitting mechanism is one sort of the projecting-portion-displacement permitting mechanism. Unlike the suspension apparatus 10 of the illustrated first embodiment, the suspension apparatus 130 of the third embodiment does not employ the body-side-unit-forcibly-moving mechanism and is configured to move the body-side unit 140 downward in accordance with the impact on the bonnet 90 and the deformation of the bonnet 90.

### 4. Fourth embodiment

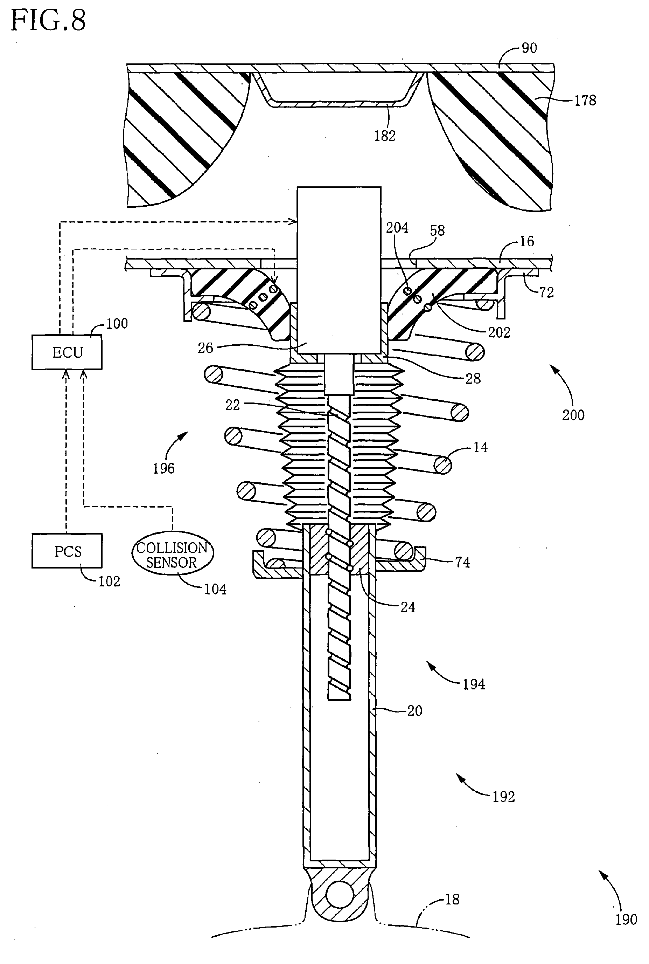

Fig. 8 shows a vehicle suspension apparatus 190 according to a fourth embodiment. In the suspension apparatus 190 of the present embodiment, the projecting-portion-forcibly- displacing mechanism is not employed. Since the suspension apparatus 190 of the third embodiment is similar in construction to the suspension apparatus 10 of the first embodiment, the same reference numerals as used in the apparatus of the first embodiment are used to identify the corresponding components, and an explanation of which is omitted or simplified.

The present suspension apparatus 190 is constituted principally by a suspension cylinder 192. Like the suspension cylinder 12 of the illustrated first embodiment, the suspension cylinder 192 of the fourth embodiment is configured such that a wheel-side unit 194 is constituted by including the cylinder 20 while a body-side unit 196 is constituted by including the motor 26, the motor casing 28, and the rod 22. The wheel-side unit 194 is coupled to the suspension lower arm 18 and the body-side unit 196 is attached to the mount portion 16. It is noted, however, that the motor casing 28 of the present embodiment is configured to accommodate only a lower portion of the motor 26. The rod 22 and the nut 24 constitute the ball screw mechanism and respectively function as an external thread portion provided in the body-side unit 196 and an internal thread portion provided in the wheel-side unit 194.

The body-side unit 196 is attached to the mount portion 16 while being supported by an upper support 200 as a support member. The upper support 200 is constituted by including an annular rubber vibration damper 202 fixed to an underside of the mount portion 16. The body-side unit 196 is attached to the mount portion 16 such that the motor casing 28 is fixed to the rubber vibration damper 202 at its central opening. In this state, the upper portion of the motor 28 projects upward from the opening 58 of the mount portion 16. That portion projecting upward functions as a projecting portion of the body-side unit 196.

In the rubber vibration damper 202, there is spirally embedded a nichrome wire 204 which is a heat-generating resistance wire (heat element). By supplying an electric current to the nichrome wire 204, the rubber vibration damper 202 can be softened, whereby a supporting force exerted by the upper support 200 is reduced and the body-side unit 196 is permitted to move downward. In this connection, the supporting force exerted by the upper support 200 can be further reduced by increasing an amount of embedment of the nichrome wire 204 or by increasing the electric current supplied to the nichrome wire 204, for instance. In some cases, the rubber vibration damper 202 may be burned through with heat, thereby reducing the supporting force down to zero.

In the suspension apparatus 190 constructed as described above, a supporting-force reducing device for reducing the supporting force of the upper support 200 by heating the upper support 200 is constituted by including the nichrome wire 204. Further, the present suspension apparatus 190 is equipped with the body-side-unit-downward-movement permitting mechanism for permitting the downward movement of the body-side unit 196 by the supporting-force reducing device. The body-side-unit-downward-movement permitting mechanism is one sort of the projecting-portion-displacement permitting mechanism. Like the suspension apparatus 130 of the illustrated third embodiment, the suspension apparatus 190 of the fourth embodiment does not employ the body-side-unit-forcibly-moving mechanism and is configured to move the body-side unit 196 downward in accordance with the impact on the bonnet 90 and the deformation of the bonnet 90.

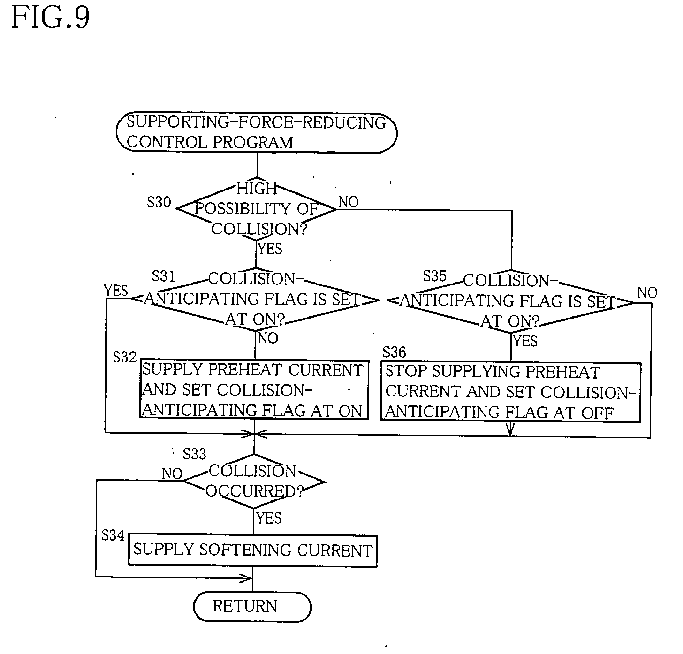

In the vehicle suspension apparatus 190 of the present embodiment, a supporting-force reducing control which is a control of the above-indicated supporting-force reducing device is carried out by the suspension ECU 100 principally constituted by the computer. The supporting-force-reducing control by the ECU 100 is carried out by executing a supporting-force-reducing control program indicated by a flow chart of Fig. 9. The control program is stored in the ROM of the computer of the ECU 100 and repeatedly implemented at short time intervals (e.g., time intervals ranging from several milliseconds to several tens of milliseconds) after an ignition switch has been placed in an ON state. Hereinafter, there will be explained in order details of the control in the present suspension apparatus referring to the flow chart of Fig. 9.

In the supporting-force-reducing control, S30 is initially implemented to make a judgment on the basis of a signal transmitted from the vehicle pre-crash safety system 102. Where it is judged in S30 that the vehicle pre-crash safety system 102 is transmitting the signal indicative of a high possibility of collision, S31 is implemented to judge whether a collision-anticipating flag is set at ON or not. The collision-anticipating flag is arranged to be initially set at OFF. The details of the flag will be explained. Where it is judged in S31 that the collision-anticipating flag is set at OFF, S32 is implemented to supply, to the nichrome wire 204 embedded in the rubber vibration damper 202, a preheat current set at a level where the rubber vibration damper 202 can be preheated to such an extent that the same 202 is not damaged. At the same time, the above-indicated collision-anticipating flag is set at ON. Where it is judged in S31 that the flag is set at ON, S32 is skipped since the preheat current has been supplied to the nichrome wire 204.

Subsequently, in S33, it is judged whether the collision sensor 104 is transmitting a signal indicating that a certain object has collided with the vehicle. Where the collision sensor 104 is transmitting the signal indicative of an occurrence of collision, S34 is implemented to supply, to the nichrome wire 204, a softening current that is set at a higher level than the preheat current, whereby the rubber vibration damper 202 is softened or may be cut, thus permitting the downward movement of the body-side unit. After implementation of S34 or after skipping of S34 as a result of judgment in S33 that the collision has not occurred, one execution of the supporting-force-reducing control program is completed.

Where it is judged in S30 that the vehicle pre-crash safety system 102 is not transmitting the signal indicative of a high possibility of collision, S35 is implemented to judge whether the collision-anticipating flag is set at ON. Where it is judged in S35 that the collision-anticipating flag is set at ON, this means that the preheat current is already supplied to the nichrome wire 204 in consequence of anticipation of collision. In this instance, it is considered that the possibility of collision has been lowered, namely, the collision will not occur, so that S36 is implemented to stop supplying of the preheat current and reset the collision-anticipating flag to OFF. Where it is judged in S35 that the collision-anticipating flat is set at OFF, S36 is skipped. After implementation of S35 or after skipping of S36, S33 and the following steps are implemented.

Upon completion of a sequence of processing explained above, one execution of the supporting-force-reducing control program is terminated. As explained above, the supporting-force-reducing control program is continuously repeated at short time intervals until the ignition switch is placed in an OFF state. In the present suspension apparatus 190, owing to the supporting-force-reducing control described above, the rubber vibration damper 202 is preheated when there is a high possibility of collision of the pedestrian or the like with the vehicle, and the body-side unit is quickly permitted to move downward upon occurrence of a collision. Further, even if the preheat current is supplied to the nichrome wire when there is a high possibility of collision of the pedestrian or the like with the vehicle, it is possible to stop supplying the preheat current and return the suspension apparatus 190 to its normal state in a case where the pedestrian or the like was not actually collided with the vehicle.

### 5. Fifth embodiment

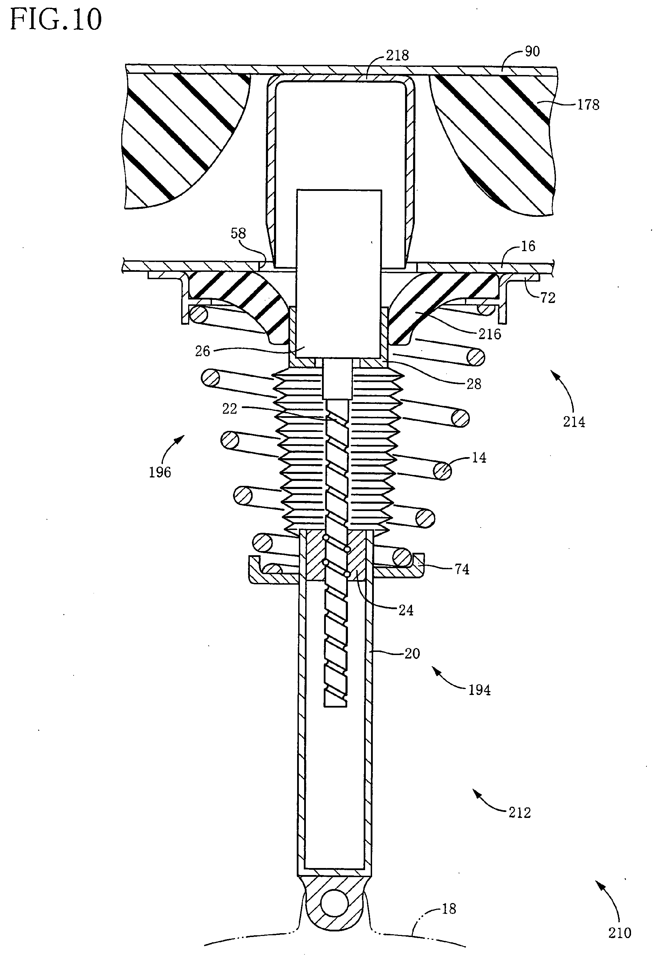

Fig. 10 shows a vehicle suspension apparatus 210 according to a fifth embodiment. The suspension apparatus 210 of the fifth embodiment is substantially identical in construction with the apparatus of the fourth embodiment, except for the body-side-unit-downward-movement permitting mechanism. Accordingly, the same reference numerals as used in the apparatus of the fourth embodiment are used to identify the corresponding components, and a detailed description of which is omitted or simplified.

The suspension apparatus 210 according to the present embodiment is constituted principally by a suspension cylinder 212. Like the upper support 200 of the fourth embodiment, an upper support 214 for supporting a body-side unit 196 of the suspension cylinder 212 is constituted by including a rubber vibration damper 216. In the rubber vibration damper 216 of the present embodiment, however, no nichrome wires are embedded. In the meantime, there is fixed, to the underside of the bonnet 90 covering the mount portion 16, a cylindrical cutter 218 having a blade at its lower end. The cutter 218 has an inside diameter larger than that of the motor casing 28 and an outside diameter smaller than the opening 58 formed in the mount portion 16. The blade of the cutter 218 is located immediately above the rubber vibration damper 216.

In the vehicle equipped with the present suspension apparatus 210, the bonnet 90 is deformed when a pedestrian comes into contact with the bonnet 90 from above upon collision of the pedestrian and the vehicle. The deformation of the bonnet 90 causes the blade of the cutter 218 disposed on the bonnet 90 to come into contact with the rubber vibration damper 216. With further deformation of the bonnet 90, the rubber vibration damper 216 is cut by the cutter 218, so that the body-side unit 196 is separated from the mount portion 16, namely, the supporting force of the upper support 214 becomes zero. In consequence, the body-side unit moves downward by its own weight. With subsequent deformation of the bonnet 90, an inner bottom surface of the cutter 218 comes into contact with the upper end of the motor 26. However, the body-side unit 196 already starts moving downward with the supporting force of the upper support 214 reduced to zero. Accordingly, the body-side unit 196 is moved further downward in accordance with the deformation of the bonnet 90 without a fear of giving an impact on the pedestrian.

In the thus constructed suspension apparatus 210, a supporting-force reducing device for reducing the supporting force of the upper support 214 as the support member by cutting the same 214 is constituted by including the cutter 218. Further, the suspension apparatus 210 is equipped with the body-side-unit-downward-movement permitting mechanism for permitting the downward movement of the body-side unit 196 by the supporting-force-reducing device. The body-side-unit-downward-movement permitting mechanism is one sort of the projecting-portion-displacement permitting mechanism. The vehicle suspension apparatus 210 of the present embodiment is configured to allow the body-side unit 196 to start moving downward by its own weight and move the body-side unit 196 further downward in accordance with the deformation of the bonnet 90.

### 6. Sixth embodiment

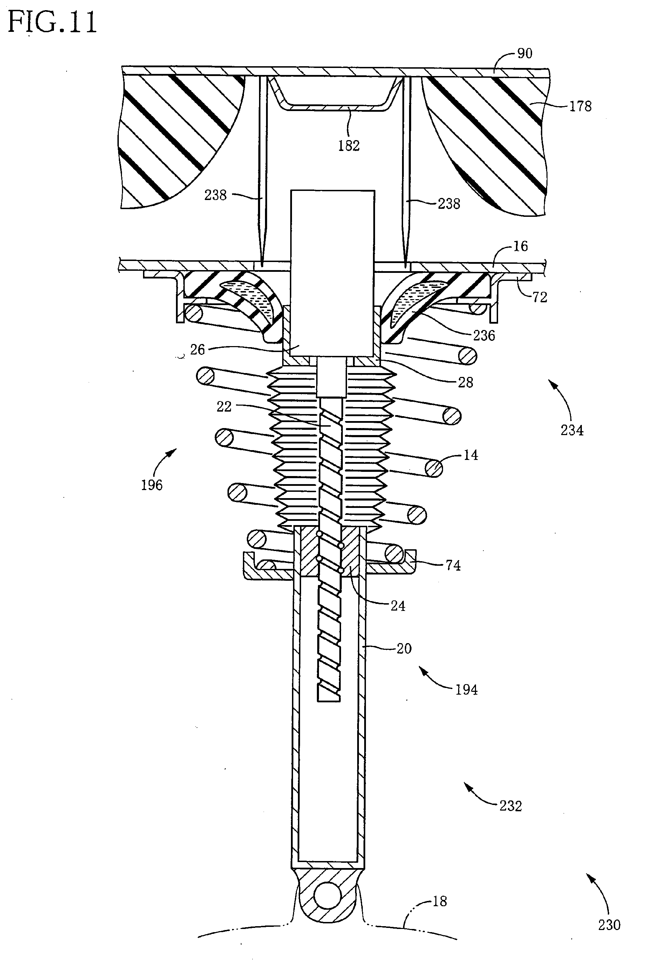

Fig. 11 shows a vehicle suspension apparatus 230 according to a sixth embodiment. The suspension apparatus 230 of the sixth embodiment is substantially identical in construction with the apparatus of the fourth embodiment, except for the body-side-unit-downward-movement permitting mechanism. Accordingly, the same reference numerals as used in the apparatus of the fourth embodiment are used to identify the corresponding components, and a detailed description of which is omitted or simplified.

The suspension apparatus 230 according to the present embodiment is constituted principally by a suspension cylinder 232. Like the upper support 200 of the fourth embodiment, an upper support 234 for supporting a body-side unit 196 of the suspension cylinder 232 is constituted by including a rubber vibration damper 236. In the rubber vibration damper 236 of the present embodiment, however, no nichrome wires are embedded. The rubber vibration damper 236 is of a fluid-filled type configured to contain a fluid in an inside thereof. In the meantime, there is fixed, to the underside of the bonnet 90 covering the mount portion 16 formed at the part of the vehicle body, a pair of drilling members 238 whose lower ends are pointed.

In the vehicle equipped with the present suspension apparatus 230, the bonnet 90 is deformed when a pedestrian comes into contact with the bonnet 90 from above upon collision of the pedestrian and the vehicle. The deformation of the bonnet 90 causes the lower ends of the drilling members 238 fixed to the underside of the bonnet 90 to come into contact with the rubber vibration damper 236. With further deformation of the bonnet 90, the rubber vibration damper 236 is punctured with the drilling members 238, so that the fluid contained in the rubber vibration damper 236 is discharged therefrom, thereby reducing the supporting force of the upper support 234. Thus, the body-side unit 196 is permitted to move downward.

In the thus constructed suspension apparatus 230, a supporting-force reducing device for reducing the supporting force of the upper support 234 by discharging the fluid contained in the rubber vibration damper 236 is constituted by including the drilling members 238. Further, the present suspension apparatus 230 is equipped with the body-side-unit-downward-movement permitting mechanism for permitting the downward movement of the body-side unit 196 by the supporting-force reducing device. The body-side-unit-downward-movement permitting mechanism is one sort of the projecting-portion-displacement permitting mechanism. The present vehicle suspension apparatus 230 is configured to move the body-side unit 196 downward in accordance with the impact on the bonnet 90 and the deformation of the bonnet 90.

### 7. Seventh embodiment

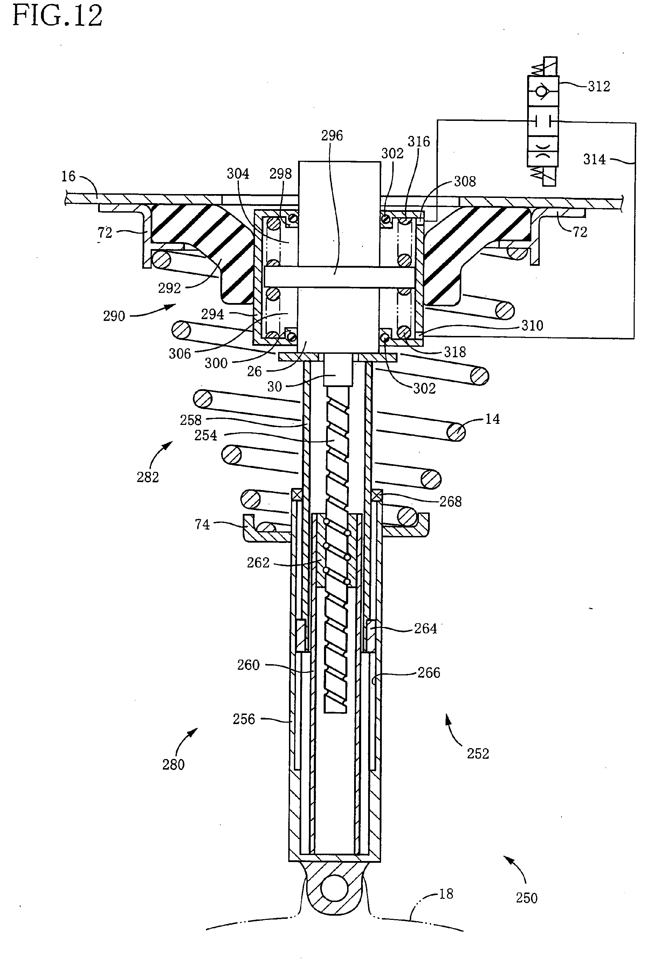

Fig. 12 shows a vehicle suspension apparatus 250 according to a seventh embodiment. Like the suspension apparatus 10 of the illustrated first embodiment, the suspension apparatus 250 of the seventh embodiment is the electromagnetic suspension apparatus which has the motor and in which the body-side unit and the wheel-side unit are coupled by the ball screw mechanism. Further, the suspension apparatus 250 is equipped with a body-side-unit-movement permitting mechanism for permitting a downward movement of the body-side unit. In the following description of the seventh embodiment, the same reference numerals as used in the apparatus of the first embodiment are used to identify the corresponding components, and a detailed explanation of which is omitted or simplified.

Like the suspension cylinder 12 of the first embodiment, a suspension cylinder 252 of the suspension apparatus 250 according to the seventh embodiment is constituted by including a motor 26 functioning as an electromagnetic actuator. A rod 254 on which an external thread is formed is connected integrally to a motor shaft 30 as a rotational shaft of the motor 26. The suspension cylinder 252 further includes an outer tube 256 as a cylindrical housing coupled to the suspension lower arm 18 and an inner tube 258 disposed in the outer tube 256 so as to project upward from an upper end of the outer tube 256. A tubular cylinder 260 is disposed within the outer tube 256 such that the cylinder 260 is fixed to an inner bottom surface of the outer tube 256. To an inner surface of an upper portion of the cylinder 260, a nut 262 for holding bearing balls is fixed. In the meantime, the inner tube 258 is fixed at its upper end to a lower end of the motor 26 and configured to house the rod 254 therein. With the rod 254 and the nut 262 engaging each other, the inner tube 258 is fitted into the outer tube 256. The inner tube 258 has, at its lower end, a pair of protruding portions 264. The protruding portions 264 are fitted in a pair of guide grooves 266 which are formed in the outer tube 256 so as to extend in an axial direction, whereby the inner tube 258 is unrotatable and movable in the axial direction, relative to the outer tube 256. The outer tube 256 has, at its upper end, a seal 268 for preventing entry of foreign matters from the outside.

The suspension cylinder 252 is configured such that a wheel-side unit 280 is constituted by including the outer tube 256 and the cylinder 260 while a body-side unit 282 is constituted by including the rod 254, the inner tube 258 and the motor 26. The wheel-side unit 280 is coupled to the suspension lower arm 18 and the body-side unit 282 is attached to the mount portion 16. The rod 254 and the nut 262 constitute the ball screw mechanism and respectively function as an external thread portion provided in the body-side unit 282 and an internal thread portion provided in the wheel-side unit 280.

The body-side unit 282 is attached to the mount portion 16 while being supported by an upper support 290. The upper support 290 includes an annular rubber vibration damper 292 fixed to the mount portion 16 and a generally cylindrical holder 294 fixed to the rubber vibration damper 292 at its central opening. The motor 26 is inserted in and held by the holder 294. More specifically explained, an annular ring 296 is fitted on an outer circumferential portion of the housing of the motor 26. An outer circumferential surface of the ring 296 is held in sliding contact with an inner circumferential surface of the holder 294. Further, inner circumferential portions of respective inner flanges 298, 300 formed at an upper end and a lower end of the holder 294, respectively, are held in sliding contact with the outer circumferential portion of the housing of the motor 26 via respective seals 302. According to such a structure, a space defined by the inner circumferential surface of the holder 294 and the outer circumferential surface of the motor 26 is divided into two sections by the ring 296. The two sections of the space are filled with a working fluid and function as fluid chambers 304, 306. For an inflow and an outflow of the working fluid in and from the two sections, ports 308, 310 are formed at the upper and lower ends of the holder 294, respectively. The two ports 308, 310 are connected to each other via a fluid passage 314 in which is provided a solenoid-operated control valve 312. In the fluid chambers 304, 306, there are respectively disposed compression coil springs 316, 318 each as an elastic member. The body-side unit 282 is attached to the mount portion 16 via the thus constructed support mechanism.

The solenoid-operated control valve 312 is a three-position valve and configured to be selectively placed in the following three states: a first state in which the two fluid chambers 304, 306 are inhibited from communicating with each other; a second state in which the two fluid chambers 304, 306 are in communication with each other via an orifice; and a third state in which a flow of the working fluid from the upper fluid chamber 304 to the lower fluid chamber 306 is inhibited while a flow of the working fluid from the lower fluid chamber 306 to the upper fluid chamber 304 is allowed. The solenoid-operated control valve 312 is normally placed in the second state. In this state, the body-side unit 282 is permitted to move in a condition in which a damping force owing to the orifice is working while the body-side unit 282 is centered at a position where the spring force of the two compression coil springs balance with each other. That is, the body-side unit 282 is elastically supported on the mount portion 16 by a damper and the springs disposed parallel with each other, so that a high-frequency vibration transmitted from the wheel-side unit 280 to the mount portion 16 via the body-side unit 282 can be effectively absorbed. Normally, the upper end of the motor 26 projects upward from the opening 58 formed in the mount portion 16. That portion of the motor 26 projecting upward functions as a projecting portion of the body-side unit 282.

When the solenoid-operated control valve 312 is switched from the normal state in which the upper end of the body-side unit 282 projects to the above-indicated third state, there is permitted only a flow of the working fluid from the lower fluid chamber 306 to the upper fluid-chamber 304. In other words, the body-side unit 282 is permitted to move downward. In the third state, where the motor 26 is rotated in a direction in which the rod 254 moves downward relative to the cylinder 260, the body-side unit 282 moves downward. In the vehicle suspension apparatus 250 according to the present embodiment, therefore, a damping-force reducing device for reducing the damping force generated by the above-indicated support mechanism is constituted by the solenoid-operated control valve 312, and the body-side-unit-downward-movement permitting mechanism for permitting the downward movement of the body-side unit 282 relative to the mount portion 16 is constituted by including the solenoid-operated control valve 312. The body-side-unit-downward-movement permitting mechanism is one sort of the projecting-portion-displacement permitting mechanism. The present vehicle suspension apparatus 250 is further equipped with the body-side-unit-forcibly-moving mechanism for forcibly moving the body-side unit 282 which has been permitted to move downward by the downward-movement permitting mechanism. The body-side-unit-forcibly-moving mechanism is one sort of the projecting-portion-forcibly-moving mechanism. In the present suspension apparatus 250, the motor 26 functions as an actuator for driving the forcibly-moving mechanism.

The body-side unit 282 is moved downward by the above-indicated forcibly-moving mechanism and reaches a position of contraction limit of the spring 318. Where the solenoid-operated control valve 312 is placed in the above-indicated first state at that position, the body-side unit 282 is prohibited from moving. The position in question is a retracted position of the body-side unit 282 at which the upper end of the body-side unit 282 does not project upward from the mount portion 16.

The present suspension apparatus 250 is configured such that the body-side unit 282 which has been moved downward can be returned to its neutral position, namely, can be returned from its retracted position to its normal-state position. For returning the body-side unit 282, the solenoid-operated control valve 312 is switched to the above-indicated second state, whereby a flow of the working fluid between the fluid chambers 304, 306 is permitted. In consequence, the body-side unit 282 is returned to the above-indicated balancing position by the springs 316, 318. That is, the body-side unit 282 is returned to the normal-state position. In this instance, by rotating the motor 26 in a direction in which the rod 254 moves upward relative to the cylinder 260, the body-side unit 282 can be moved upward.

As in the illustrated first embodiment, on an occasion where a collision of the vehicle is detected or where a collision of the vehicle is anticipated, the above-indicated downward-movement permitting mechanism and forcibly-moving mechanism are operated by the ECU 100 as the control device. In the present embodiment, the ECU 100 controls the solenoid-operated control valve 312 and the motor 26. The control in the present embodiment is substantially the same as that in the illustrated first embodiment, except that the control of the solenoid-operated control valve 312 is executed in place of the control of the electromagnetic solenoid in the first embodiment. Accordingly, a detailed explanation of the control in the present embodiment is dispensed with.

### 8. Eighth embodiment

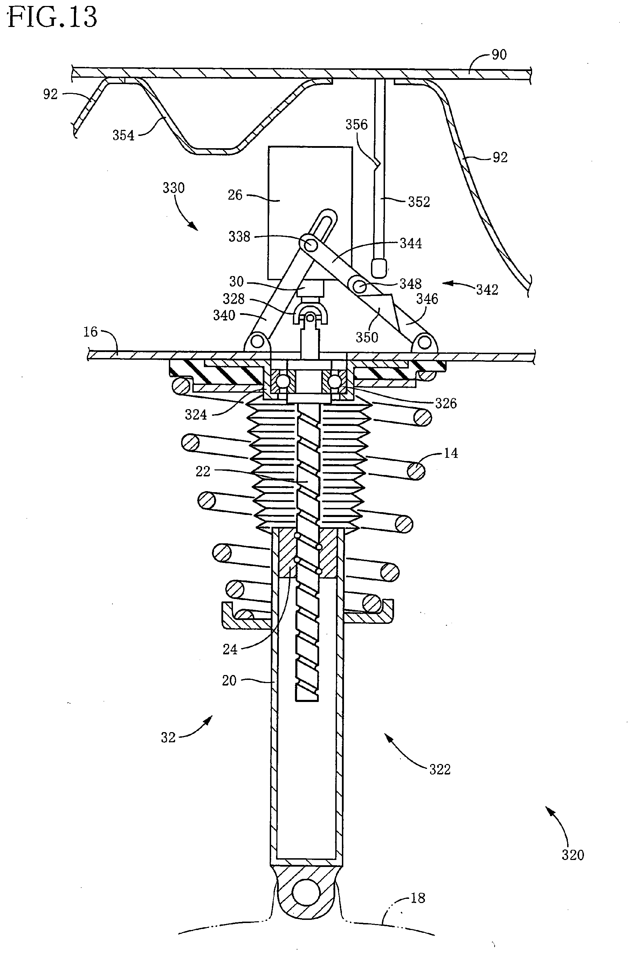

Fig. 13 shows a vehicle suspension apparatus 320 according to an eighth embodiment. Like the suspension apparatus 10 of the illustrated first embodiment, the suspension apparatus 320 of the eighth embodiment is an electromagnetic suspension apparatus which has a motor and in which a body-side unit and a wheel-side unit are coupled by a ball screw mechanism. In the following description of the eighth embodiment, the same reference numerals as used in the apparatus of the first embodiment are used to identify the corresponding components, and a detailed explanation of which is omitted or simplified.

The suspension apparatus 320 according to the present embodiment has a suspension cylinder 322 similar to the suspension cylinder 12 of the first embodiment. Unlike the rod 22 of the first embodiment, the rod 22 of the present embodiment is rotatably and axially immovably connected, at its upper portion, to the mount portion 16 by a rod support member 324 that is fixedly disposed on the mount portion, via a bearing 326. An upper end of the rod 22 is connected to the motor shaft 30 of the motor 26 via a universal joint 328. In other words. The suspension cylinder 322 of the present embodiment is configured such that a wheel-side unit 32 similar to that in the illustrated first embodiment is constituted by including the cylinder 20 while a body-side unit 330 is constituted by including the motor 26, the universal joint 328, and the rod 22. The wheel-side unit 32 is coupled to the lower arm 18 and the body-side unit 330 is attached to the mount portion 16.

The motor 26 is supported by a pair of links 340 and a pair of links 342 so as to be coaxial with the rod 22, namely, so as to extend upright. The links 340 and the links 342 are configured such that each of the links 340, 342 is pivotably supported at its one end on the upper surface of the mount portion 16 and connected at the other end to a corresponding one of two pins 338 that protrude from the motor 26. In this state, the motor 26 and the universal joint 328 project upward from the mount portion 16. That portion projecting upward functions as a projecting portion of the body-side unit 330.

Each of the two links 342 includes two link members 344, 346. One end of the link member 344 is pivotably connected to the motor 26 and one end of the link member 346 is pivotably connected to the mount portion 16 while the other ends of the respective link members 344, 346 are rotatably connected to each other by a connecting shaft 348. The two link members 344, 346 are relatively firmly connected at the other ends thereof, whereby the two link members 344, 346 behave like a single bar. To the two links 342, pressure-receiving pieces 350 are respectively fixed, and a pair of plunger rods 352 are disposed on the underside of the bonnet 90 such that the plunger rods 352 are fixed to the lower surface of the bonnet 90 so as to extend to right above the respective pressure-receiving pieces 350.

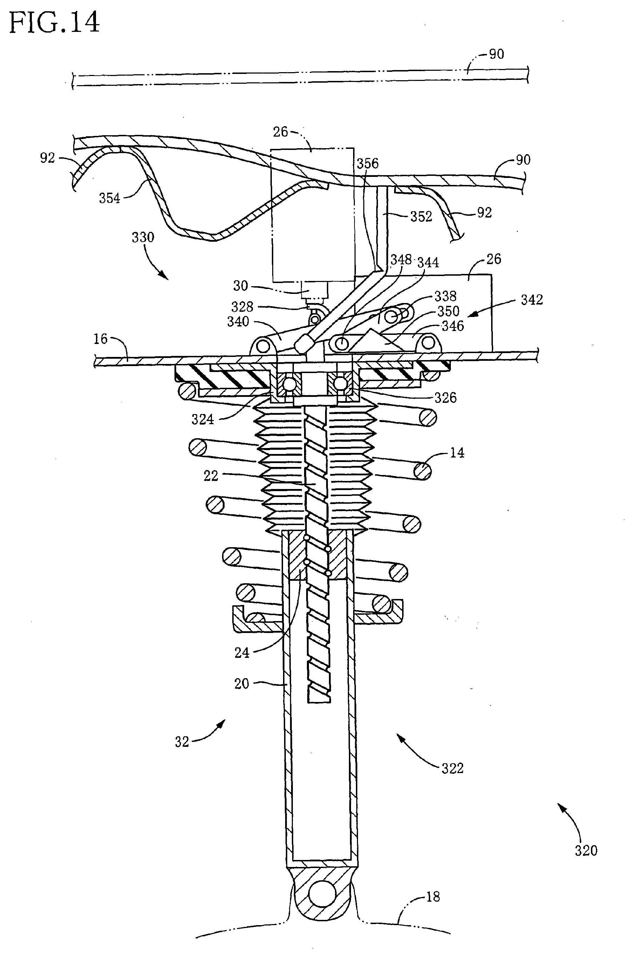

In the vehicle equipped with the present suspension apparatus 320, the bonnet 90 is deformed when a pedestrian comes into contact with the bonnet 90 from above upon collision of the pedestrian and the vehicle, for instance. The deformation of the bonnet 90 causes the plunger rods 352 disposed on the bonnet 90 to push down the respective pressure-receiving pieces 350, whereby the links 342 are bent about the corresponding connecting shafts 348 and the motor 26 is permitted to rotate clockwise in Figs. 13 and 14 about the universal joint 328. In other words, the motor 26 as a part of the projecting portion of the body-side unit 330 is permitted to incline. With further deformation of the bonnet 90, a rib 354 disposed on the underside of the bonnet 90 almost comes into contact with the upper end of the motor 26. In this instance, however, because the motor 26 is already permitted to incline, the motor 26 is rotated about the universal joint 328 to such an extent that the motor 26 contacts the mount portion 16, as shown in Fig. 14. In this connection, each plunger rod 352 has a fragile portion 356 and is configured to easily bend at the fragile portion 356 when the plunger rod 352 contacts the mount portion 16 after having pushed the pressure-receiving piece 356. As compared with the bonnet 90 in the original state indicted by two-dot chain line in Fig. 14, the distance between the bonnet 90 and the upper end of the motor 26 as the upper end of the suspension cylinder 322 is increased upon application of the impact on the bonnet 90, so that the present suspension apparatus 320 is capable of effectively mitigating the impact that the pedestrian receives.

The thus constructed vehicle suspension apparatus 320 is equipped with a projecting-portion-inclination permitting mechanism for permitting inclination of the motor 26. The projecting-portion-inclination permitting mechanism is one sort of the projecting-portion-displacement permitting mechanism for permitting inclination of the projecting portion such that the amount of projection of the projecting portion of the body-side unit 330 from the mount portion 16 decreases.

### 9. Ninth embodiment

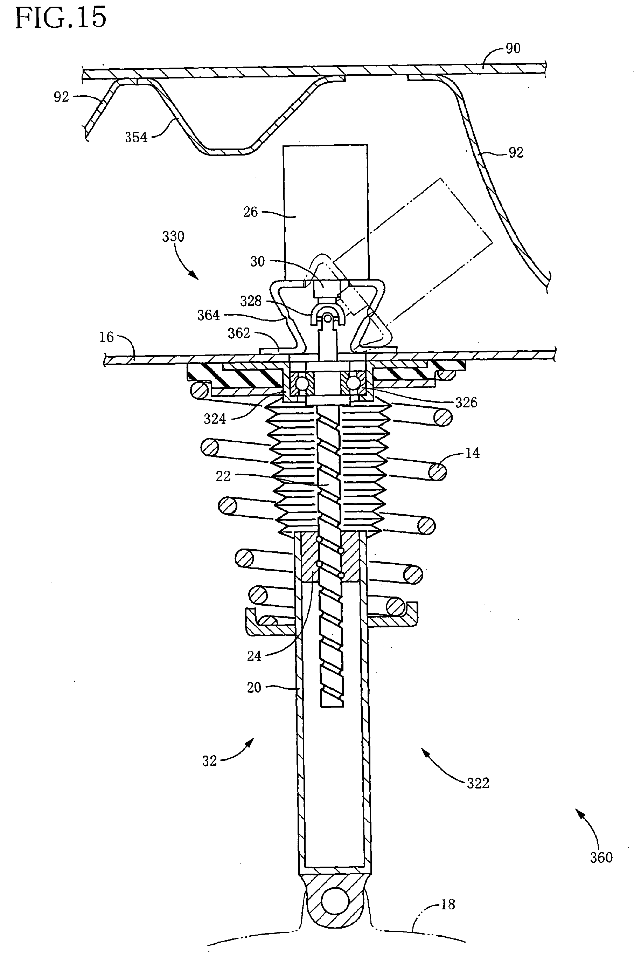

Fig. 15 shows a vehicle suspension apparatus 360 according to a ninth embodiment. The suspension apparatus 360 of the ninth embodiment is an electromagnetic suspension apparatus equipped with a suspension cylinder 322 similar to that of the illustrated eighth embodiment and identical in construction with the suspension apparatus 320 of the eighth embodiment except for the projecting-portion-inclination permitting mechanism. In the following explanation of the present embodiment, therefore, the same reference numerals as used in the apparatus of the eighth embodiment are used to identify the corresponding components, and a detailed explanation of which is omitted or simplified.

In the present suspension apparatus 360, the motor 26 is supported by a pair of motor-supporting members 362 each as a fracturable member, such that the motor 26 is coaxial with the rod 22, namely, extends upright. Each motor-supporting member 362 is generally Z-shaped and made of resin. One end of each motor-supporting member 362 is fixed to the lower end of the motor 26 and the other end thereof is fixed to the upper surface of the mount portion 16. In a state in which the motor 26 is supported by the pair of motor-supporting members 362, the motor 26 and the universal joint 328 project upward from the mount portion 16. That portion projecting upward functions as a projecting portion of the body-side unit 330.

In the vehicle equipped with the present suspension apparatus 360, the bonnet 90 is deformed when a pedestrian comes into contact with the bonnet 90 from above upon collision of the pedestrian and the vehicle, for instance. The deformation of the bonnet 90 causes the rib 354 disposed on the underside of the bonnet 90 to collide with the upper end of the motor 26, so that the motor 26 receives a force which is clockwise in Fig. 15 about the universal joint 328. Each motor-supporting member 362 has a fragile portion 364 and is configured to fracture at the fragile portion 364 due to the force applied to the motor 26, so that the motor 26 is inclined. The thus constructed vehicle suspension apparatus 360 is equipped with the projecting-portion-inclination permitting mechanism for permitting inclination of the motor 26. The projecting-portion-inclination permitting mechanism is one sort of the projecting-portion-displacement permitting mechanism. Accordingly, the present suspension apparatus 360 assures advantages similar to those assured by the apparatus 320 of the illustrated eighth embodiment. In the projecting- portion-inclination permitting mechanism according to the present embodiment, each motor-supporting member 362 as the fracturable member may be configured to be fractured by an actuator or the like.

## Claims

1. A suspension apparatus for a vehicle comprising:
a damping-force generating device which includes a wheel-side unit coupled to a wheel-holding member that holds a wheel and a body-side unit mounted on a mount portion that is formed at a part of a vehicle body located above the wheel, such that an upper end of the body-side unit projects upward from the mount portion, the damping-force generating device generating a damping force with respect to a relative movement of the wheel and the part of the vehicle body, based on a resistance to a relative movement of the wheel-side unit and the body-side unit associated with the relative movement of the wheel and the part of the vehicle body, and
a projecting-portion-displacement permitting mechanism for permitting a displacement of at least a projecting portion which is a portion of the body-side unit projecting upward from the mount portion, such that an amount of projection of the projecting portion from the mount portion decreases.

2. The suspension apparatus according to claim 1, comprising: (a) an external thread portion and an internal thread portion which engage each other and one of which is provided in the wheel-side unit immovably in an upward and downward direction while the other of which is provided in the body-side unit immovably in the upward and downward direction, the external thread portion and the internal thread portion rotating relative to each other associated with the relative movement of the wheel-side unit and the body-side unit; and (b) a motor which applies a relative rotational torque to the external thread portion and the internal thread portion for thereby giving the resistance to the relative movement of the wheel-side unit and the body-side unit.

3. The suspension apparatus according to claim 1 or 2, which comprises an elastic member and a hydraulic damper disposed parallel to each other and which is configured such that the body-side unit is elastically supported on the mount portion by the elastic member and the hydraulic damper.

4. The suspension apparatus according to any one of claims 1-3, wherein the projecting-portion-displacement permitting mechanism is a body-side-unit-downward- displacement permitting mechanism for permitting a downward movement of the body-side unit relative to the mount portion.

5. The suspension apparatus according to claim 4, comprising a support member for fixedly supporting the body-side unit on the mount portion,
wherein the body-side-unit-downward-displacement permitting mechanism includes a supporting-force reducing device which is operable to reduce a supporting force exerted by the supporting member.

6. The suspension apparatus according to claim 5, wherein the support member is a rubber member, and the supporting-force reducing device is configured to heat the support member.

7. The suspension apparatus according to claim 5, wherein the support member is a rubber member, and the supporting-force reducing device is configured to cut the support member.

8. The suspension apparatus according to claim 5, wherein the support member is a rubber member which contains a fluid therein, and the supporting-force reducing device is configured to allow the fluid to be discharged from the support member.

9. The suspension apparatus according to any one of claims 4-8, which is configured to allow a downward movement of the body-side unit relative to the mount portion and which comprises a movement-prohibiting device for prohibiting the downward movement of the body-side unit, wherein the body-side-unit-downward-movement permitting mechanism includes a prohibition-releasing device for releasing the prohibition of the downward movement of the body-side unit by the movement-prohibiting device.

10. The suspension apparatus according to any one of claims 4-9, which comprises an elastic member and a hydraulic damper disposed parallel to each other and which is configured such that the body-side unit is elastically supported on the mount portion by the elastic member and the hydraulic damper,
wherein the body-side-unit-downward-movement permitting mechanism includes a damping-force reducing device for reducing a damping force generated by the hydraulic damper, and
wherein the body-side-unit-downward-movement permitting mechanism is configured to permit the downward movement of the body-side unit relative to the mounting portion owing to a reduction in the damping force by the damping-force reducing device.

11. The suspension apparatus according to any one of claims 4-10, comprising a body-side-unit-forcibly-moving mechanism for forcibly moving, downward, the body-side unit that is permitted to move downward by the body-side-unit-downward-movement permitting mechanism.

12. The suspension apparatus according to claim 11, the body-side-unit-forcibly-moving mechanism includes an actuator and is operable to forcibly move the body-side unit downward by a drive force generated by the actuator.

13. The suspension apparatus according to claim 12, comprising: (a) an external thread portion and an internal thread portion which engage each other and one of which is provided in the wheel-side unit immovably in an upward and downward direction while the other of which is provided in the body-side unit immovably in the upward and downward direction, the external thread portion and the internal thread portion rotating relative to each other associated with the relative movement of the wheel-side unit and the body-side unit; and (b) a motor which applies a relative rotational torque to the external thread portion and the internal thread portion for thereby giving the resistance to the relative movement of the wheel-side unit and the body-side unit,
wherein the motor functions as the actuator of the body-side-unit-forcibly-moving mechanism.

14. The suspension apparatus according to any one of claims 11-13, wherein the body-side-unit-forcibly-moving mechanism is operable to forcibly move the body-side unit downward when a collision of the vehicle is detected.

15. The suspension apparatus according to any one of claims 11-14, wherein the body-side-unit-forcibly-moving mechanism is operable to forcibly move the body-side unit downward when a collision of the vehicle is anticipated.

16. The suspension apparatus according to any one of claims 11-15, wherein the body-side-unit-forcibly-moving mechanism has a function of returning, upward, the body-side unit which has been forcibly moved downward.

17. The suspension apparatus according to any one of claims 1-3, wherein the projecting-portion-displacement permitting mechanism is a projecting-portion-inclination permitting mechanism for permitting an inclination of the projecting portion of the body-side unit.

18. The suspension apparatus according to claim 17, comprising: (a) an external thread portion and an internal thread portion which engage each other and one of which is provided in the wheel-side unit immovably in an upward and downward direction while the other of which is provided in the body-side unit immovably in the upward and downward direction, the external thread portion and the internal thread portion rotating relative to each other associated with the relative movement of the wheel-side unit and the body-side unit; and (b) a motor which is disposed at the upper end of the body-side unit as one constituent element thereof and which applies a relative rotational torque to the external thread portion and the internal thread portion for thereby giving the resistance to the relative movement of the wheel-side unit and the body-side unit,
wherein the projecting-portion-inclination permitting mechanism is operable to permit an inclination of the motor.

19. The suspension apparatus according to any one of claims 1-18, comprising a projecting-portion-forcibly-displacing mechanism for forcibly displacing at least the projecting portion of the body-side unit that is permitted to displace by the projecting-portion-displacement permitting mechanism.

20. The suspension apparatus according to claim 19, the projection-portion-forcibly-displacing mechanism includes an actuator and is operable to forcibly displace at least the projecting portion of the body-side unit by a drive force generated by the actuator.

21. The suspension apparatus according to claim 19 or 20, wherein the projecting-portion-forcibly-displacing mechanism is operable to forcibly displace at least the projecting portion of the body-side unit when a collision of the vehicle is detected.

22. The suspension apparatus according to claim 19 or 20, wherein the projecting-portion-forcibly-displacing mechanism is operable to forcibly displace at least the projecting portion of the body-side unit when a collision of the vehicle is anticipated.

23. The suspension apparatus according to any one of claims 19-22, wherein the projecting-portion-forcibly-displacing mechanism has a function of returning at least the projecting portion of the body-side unit which has been forcibly displaced.

24. The suspension apparatus according to any one of claims 1-23, which is to be installed on a vehicle having a hood disposed at a position that is above the mounting portion and that is spaced apart from the upper end of the body-side unit and which comprises an impact-absorbing member which is disposed between the hood and the part of the vehicle body at which the mount portion is formed, for absorbing an impact that acts on the hood.

## Amended claims

### Amended claims under Art. 19.1 PCT

1. (Amended) A suspension apparatus for a vehicle comprising:
a damping-force generating device which includes a wheel-side unit coupled to a wheel-holding member that holds a wheel and a body-side unit mounted on a mount portion that is formed at a part of a vehicle body located above the wheel, such that an upper end of the body-side unit projects upward from the mount portion, the damping-force generating device generating a damping force with respect to a relative movement of the wheel and the part of the vehicle body, based on a resistance to a relative movement of the wheel-side unit and the body-side unit associated with the relative movement of the wheel and the part of the vehicle body, and
a projecting-portion-displacement permitting mechanism for permitting a displacement of at least a projecting portion which is a portion of the body-side unit projecting upward from the mount portion, such that an amount of projection of the projecting portion from the mount portion decreases, the projecting-portion-displacement permitting mechanism being for dealing with an impact on a hood that is disposed above the mount portion so as to be spaced apart from the upper end of the body-side unit.

Statement under Art. 19.1 PCT
Claim 1 is amended to clarify the function of "the projecting-portion-displacement permitting mechanism" by adding "the projecting-portion-displacement permitting mechanism being for dealing with an impact on a hood that is disposed above the mount portion so as to be spaced apart from the upper end of the body-side unit" as a feature of "the projecting-portion-displacement permitting mechanism".

The reference 1 (EP 1306238 A2) and the reference 2 (microfilmed specification and drawings of Japanese Utility Model Application No. 59-052458 corresponding to Publication No. 60-164413) cited in the International Search Report do not disclose or suggest the above-described function of "the projecting-portion-displacement permitting mechanism" in the present invention, namely, the function of dealing with the impact on the hood.

According to the present invention, "the projecting-portion-displacement permitting mechanism" assures an effect that "it is possible to effectively absorb an impact that acts on the hood from above, by utilizing a space between the upper end of the damping-force generating device and the hood in which the distance therebetween is increased", as described in paragraph [0008] of the specification of the present application.
